# EUROPEAN PATENT APPLICATION

(11) **EP 4 633 180 A1**
(43) Date of publication of application: **15.10.2025**
(21) Application number: 23900512.7
(22) Date of filing: 28.11.2023
(51) Int. Cl.: H04N 23/60, G03B 17/00

(54) **IMAGE PROCESSING DEVICE AND METHOD**

(30) Priority: 07.12.2022 US 202263430791 P
(71) Applicant: Sony Group Corporation, Tokyo 108-0075 (JP)
(72) Inventor: HIRATSUKA Yosuke, Tokyo 108-0075 (JP)
(74) Representative: D Young & Co LLP
(86) International application number: PCT/JP2023/042469
(87) International publication number: WO 2024/122396

(57) **Abstract**

The present disclosure relates to an image processing device and an image processing method capable of suppressing a reduction in the usability of a captured image.

A first time is set; a second time supplied from a server is acquired; first time information in which the set first time is set as a start time and second time information in which the acquired second time is set as a start time are managed using a local clock generated in a device; an image of a subject is captured to generate a captured image; and a file is generated storing the captured image, a first image capture time indicating a timing of generation of the captured image by using the first time information, and a second image capture time indicating the timing of generation by using the second time information. The present disclosure can be applied to, for example, an image processing device, an image processing method, or the like.

## Description

### [Technical Field]

The present disclosure relates to an image processing device and an image processing method, and more particularly to an image processing device and an image processing method capable of suppressing a reduction in the usability of a captured image.

### [Background Art]

Hitherto, for an imaging device or the like in a case of storing, in a file, an image capture time indicating a timing of generation of a captured image together with the captured image (i.e., adding the image capture time to the image), there has been a method in which the imaging device manages time information, for which a user or the like can set a time, in order to generate the image capture time. This time information is referred to also as local time information, and the image capture time indicated by this local time information is referred to also as image capture local time. Since the time in this local time information can be set by the user or the like, it is easy to synchronize the image capture times (match the times) between imaging devices. Therefore, using the image capture local times makes it possible to more easily sort captured images generated by a plurality of imaging devices, based on the image capture times. However, an image capture local time can be easily falsified, and it is therefore difficult to guarantee that the image capture local time is the actual image capture time of the captured image.

There has also been a method in which a current time is acquired from a clock server or the like, and time information based on the current time is managed by an imaging device to generate an image capture time. This time information is referred to also as server time information, and the image capture time indicated by this server time information is referred to also as image capture server time. The time in this server time information has been managed in such a way in which a user or the like cannot change that time. Therefore, it has been possible to guarantee with a certain degree of precision that an image capture server time is the actual image capture time of a captured image. However, the time information is managed in the imaging device by using a clock signal generated by a crystal oscillator included in the imaging device, and generally the accuracy thereof is not sufficiently high. Thus, the server time information is prone to discrepancies between imaging devices, making it difficult to use the server time information to sort captured images generated by the plurality of imaging devices, based on image capture times.

### [Citation List]

### [Patent Literature]

[PTL 1]
WO 2022/137798

### [Summary]

### [Technical Problem]

In other words, in these methods, it has been difficult to suppress a reduction in accuracy of an image capture time added to a captured image and to suppress a reduction in the accuracy of synchronization of the image capture times between imaging devices. Therefore, there is a concern that the accuracy of the determination of authenticity of a captured image based on an image capture time is reduced, the sorting accuracy of captured images based on image capture times is reduced, or the ease of operation thereof decreases. As a result, there is a concern that the usability (ease of use) of a captured image becomes poor.

The present disclosure has been made in consideration of such circumstances, and makes it possible to suppress a reduction in the usability of a captured image.

### [Solution to Problem]

An image processing device according to one aspect of the present technology is an image processing device including: a setting unit that sets a first time; an acquisition unit that acquires a second time supplied from a server; a time management unit that manages, using a local clock generated in the device, first time information in which the set first time is set as a start time and second time information in which the acquired second time is set as a start time; an imaging unit that captures an image of a subject to generate a captured image; and a file generation unit that generates a file storing the captured image, a first image capture time indicating a timing of generation of the captured image by using the first time information, and a second image capture time indicating the timing of generation by using the second time information.

An image processing method according to one aspect of the present technology is an image processing method including: setting a first time; acquiring a second time supplied from a server; managing, using a local clock generated in a device, first time information in which the set first time is set as a start time and second time information in which the acquired second time is set as a start time; capturing an image of a subject to generate a captured image; and generating a file storing the captured image, a first image capture time indicating a timing of generation of the captured image by using the first time information, and a second image capture time indicating the timing of generation by using the second time information.

An image processing device according to another aspect of the present technology is an image processing device including: a file acquisition unit that acquires a file in which a captured image generated by an imaging device, a first image capture time indicating a timing of generation of the captured image by using first time information, and a second image capture time indicating the timing of generation by using second time information are stored; and a display processing unit that displays the captured image, the first image capture time, and the second image capture time, wherein the first time information is time information, in which a first time set in the imaging device is set as a start time, and, which is managed using a local clock generated in the imaging device, and the second time information is time information, in which a second time supplied to the imaging device from a server is set as a start time, and, which is managed using the local clock.

An image processing method according to another aspect of the present technology is an image processing method including: acquiring a file in which a captured image generated by an imaging device, a first image capture time indicating a timing of generation of the captured image by using first time information, and a second image capture time indicating the timing of generation by using second time information are stored; and displaying the captured image, the first image capture time, and the second image capture time, wherein the first time information is time information, in which a first time set in the imaging device is set as a start time, and, which is managed using a local clock generated in the imaging device, and the second time information is time information, in which a second time supplied to the imaging device from a server is set as a start time, and, which is managed using the local clock.

In the image processing device and the image processing method of one aspect of the present technology, a first time is set; a second time supplied from a server is acquired; first time information in which the set first time is set as a start time and second time information in which the acquired second time is set as a start time are managed using a local clock generated in the device; an image of a subject is captured to generate a captured image; and a file is generated storing the captured image, a first image capture time indicating a timing of generation of the captured image by using the first time information, and a second image capture time indicating the timing of generation by using the second time information.

In the image processing device and the image processing method according to the other aspect of the present technology, a file is acquired in which a captured image generated by an imaging device, a first image capture time indicating a timing of generation of the captured image by using first time information, and a second image capture time indicating the timing of generation by using second time information are stored; and the captured image, the first image capture time, and the second image capture time are displayed.

### [Brief Description of Drawings]

[Fig. 1]

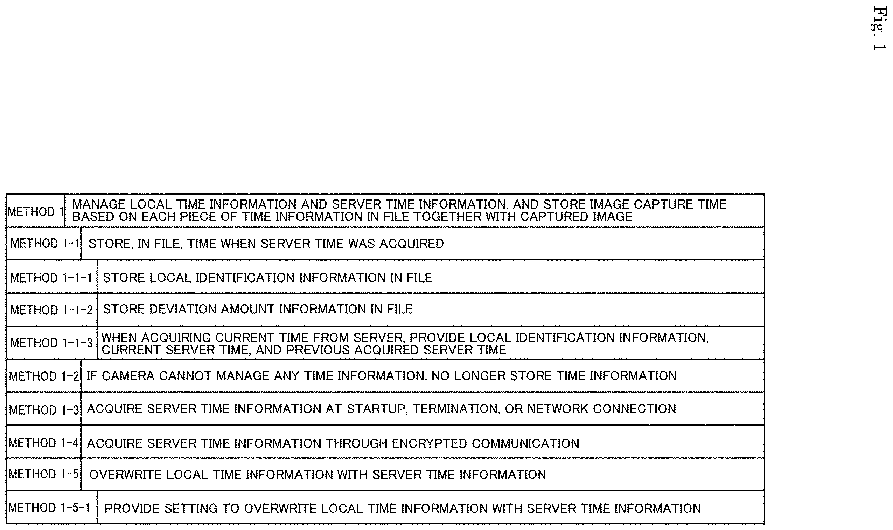

   Fig. 1 illustrates an example of a method of generating an image file.
[Fig. 2]

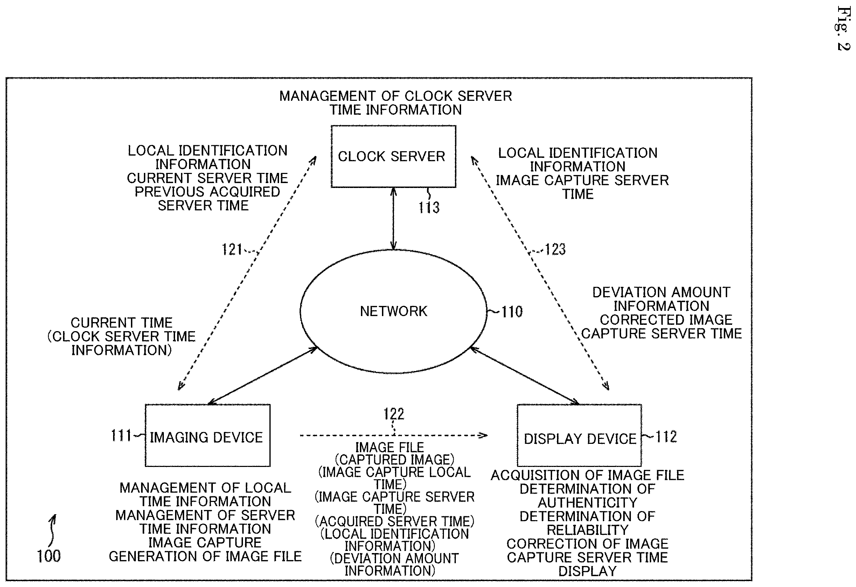

   Fig. 2 is a diagram illustrating an example of the main configuration of an image processing system.
[Fig. 3]

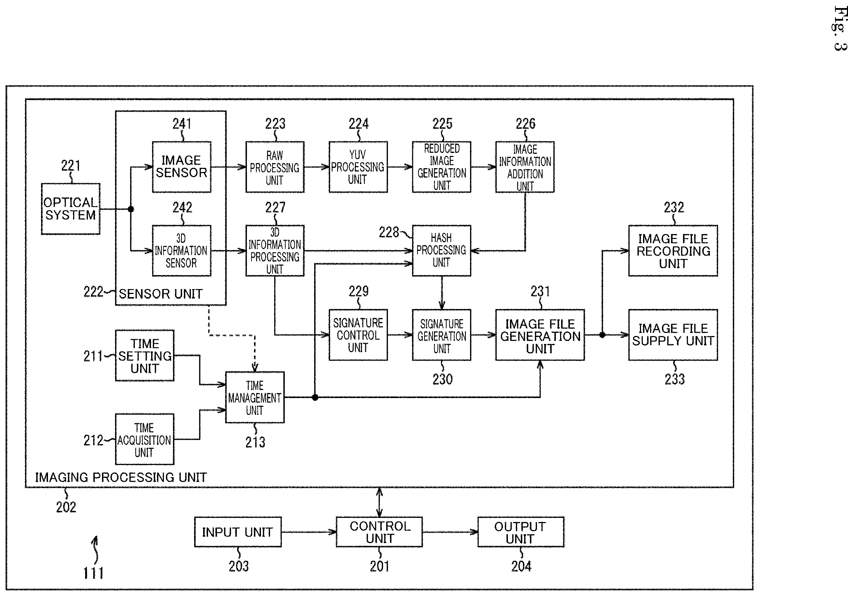

   Fig. 3 is a block diagram illustrating an example of the main configuration of an imaging device.
[Fig. 4]

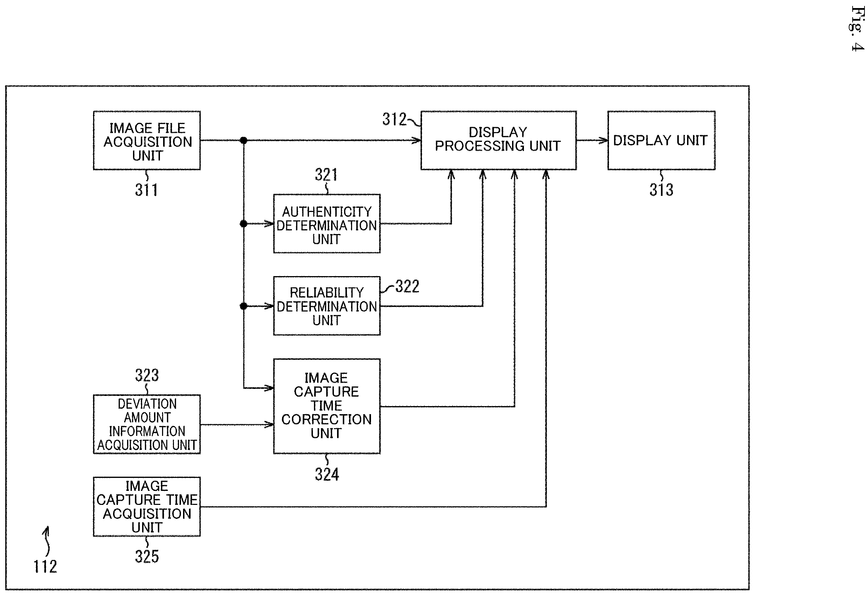

   Fig. 4 is a block diagram illustrating an example of the main configuration of a display device.
[Fig. 5]

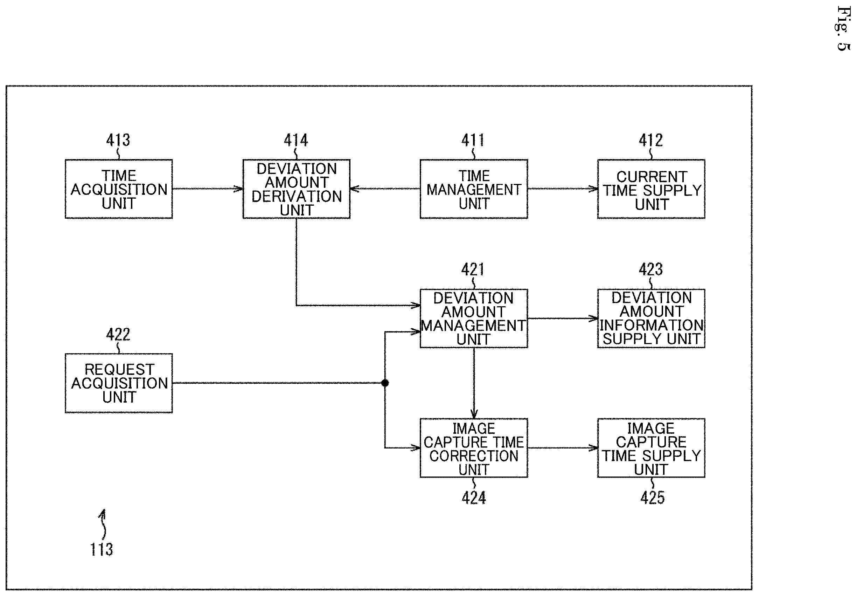

   Fig. 5 is a block diagram illustrating an example of the main configuration of a clock server.
[Fig. 6]

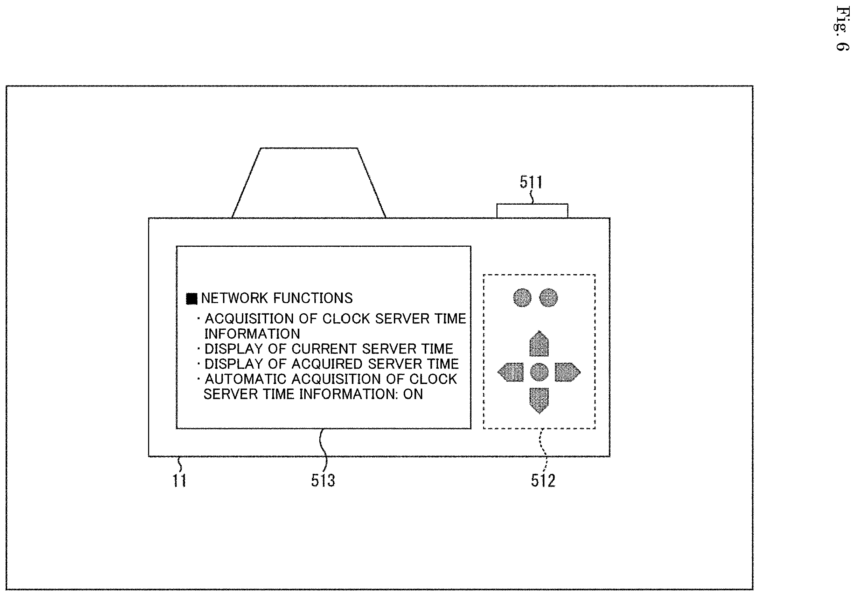

   Fig. 6 is an external view illustrating a display example.
[Fig. 7]

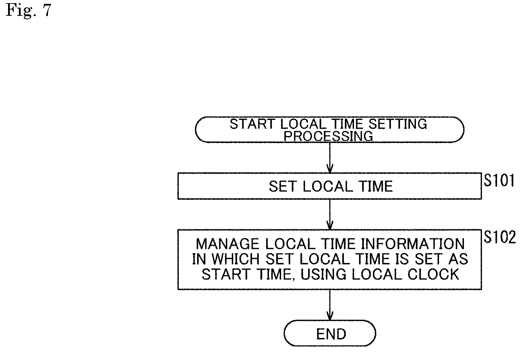

   Fig. 7 is a flowchart illustrating an example of the flow of local time setting processing.
[Fig. 8]

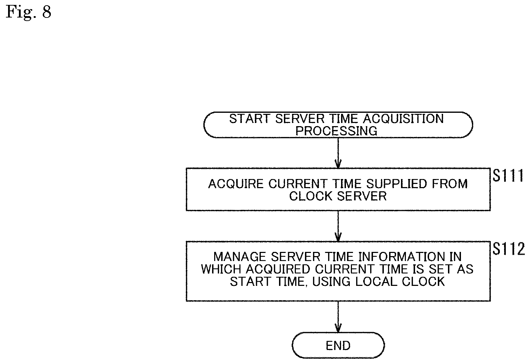

   Fig. 8 is a flowchart illustrating an example of the flow of server time acquisition processing.
[Fig. 9]

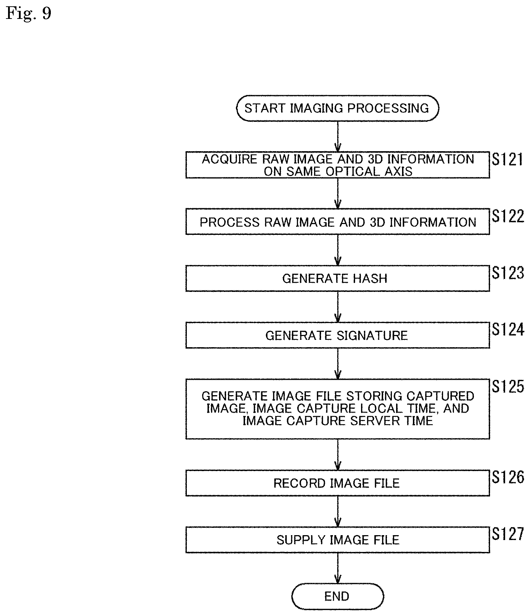

   Fig. 9 is a flowchart illustrating an example of the flow of imaging processing.
[Fig. 10]

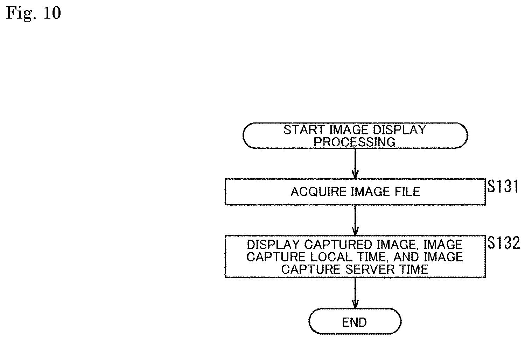

   Fig. 10 is a flowchart illustrating an example of the flow of image display processing.
[Fig. 11]

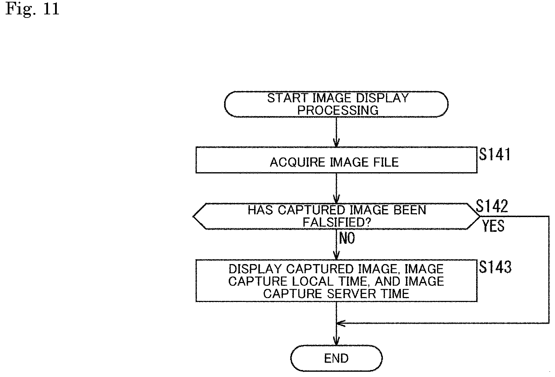

   Fig. 11 is a flowchart illustrating an example of the flow of image display processing.
[Fig. 12]

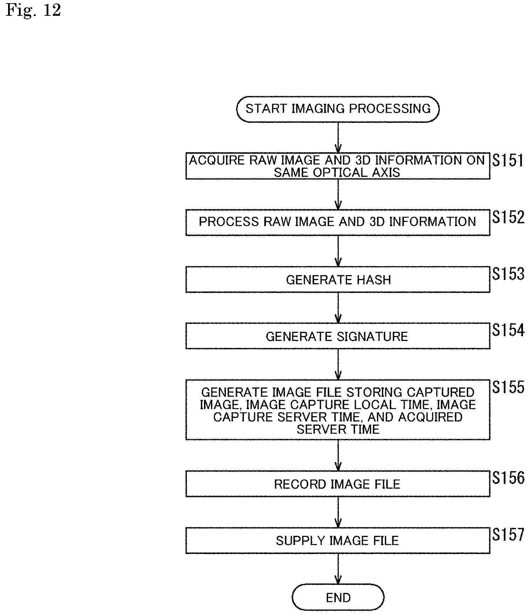

   Fig. 12 is a flowchart illustrating an example of the flow of imaging processing.
[Fig. 13]

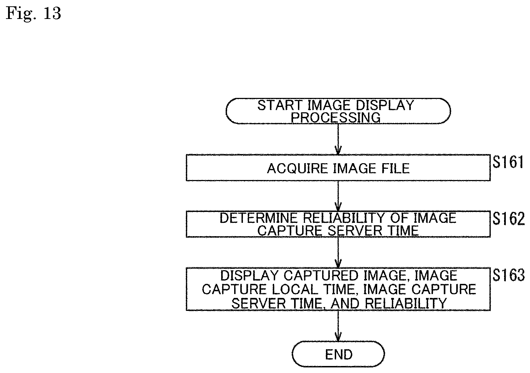

   Fig. 13 is a flowchart illustrating an example of the flow of image display processing.
[Fig. 14]

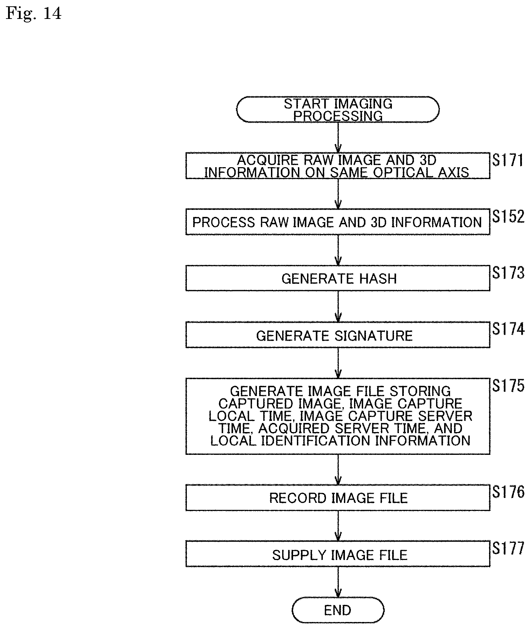

   Fig. 14 is a flowchart illustrating an example of the flow of imaging processing.
[Fig. 15]

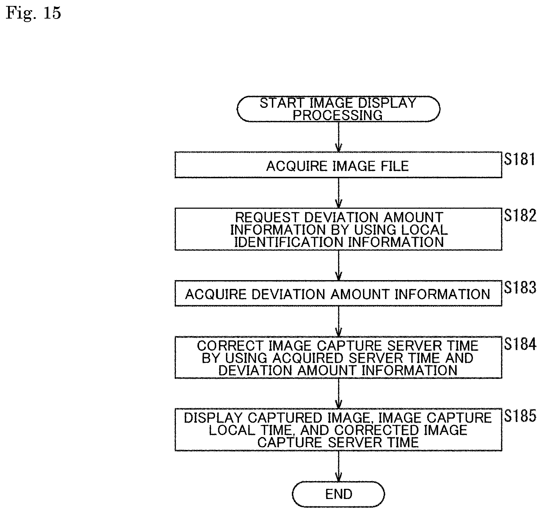

   Fig. 15 is a flowchart illustrating an example of the flow of image display processing.
[Fig. 16]

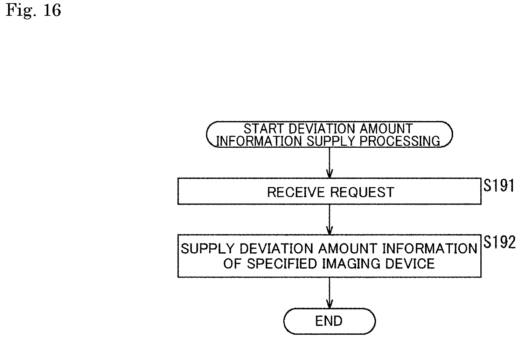

   Fig. 16 is a flowchart illustrating an example of the flow of discrepancy amount information supply processing.
[Fig. 17]

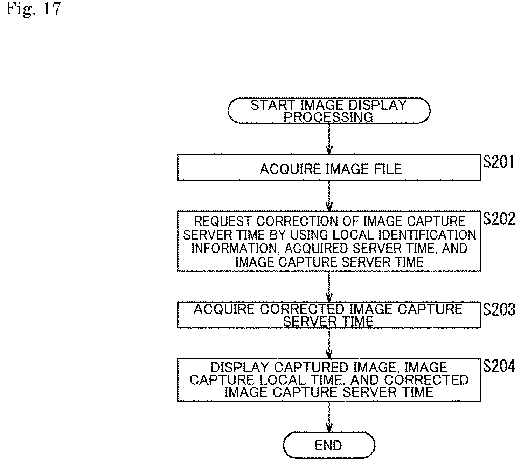

   Fig. 17 is a flowchart illustrating an example of the flow of image display processing.
[Fig. 18]

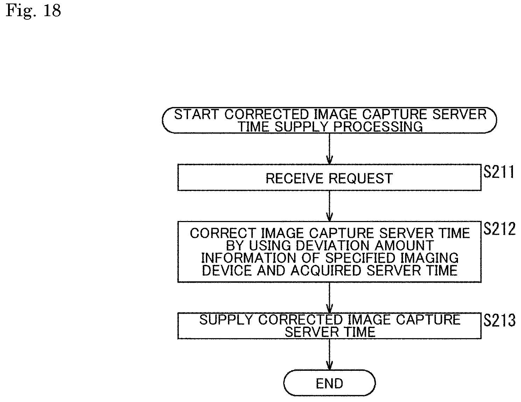

   Fig. 18 is a flowchart illustrating an example of the flow of corrected image capture server time supply processing.
[Fig. 19]

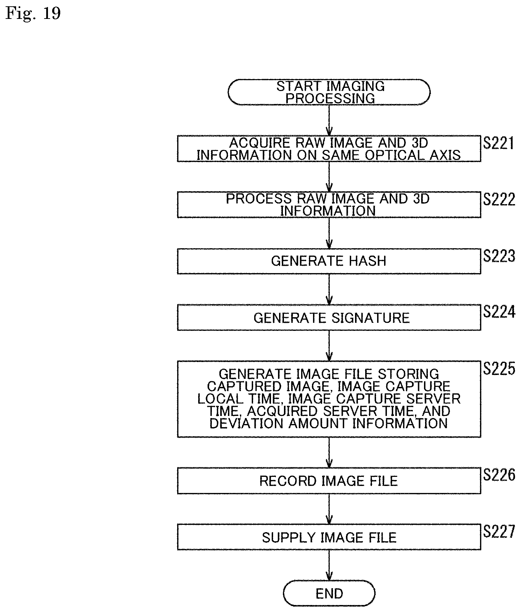

   Fig. 19 is a flowchart illustrating an example of the flow of imaging processing.
[Fig. 20]

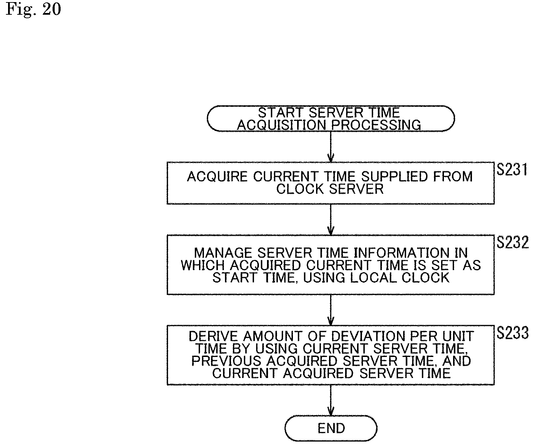

   Fig. 20 is a flowchart illustrating an example of the flow of server time acquisition processing.
[Fig. 21]

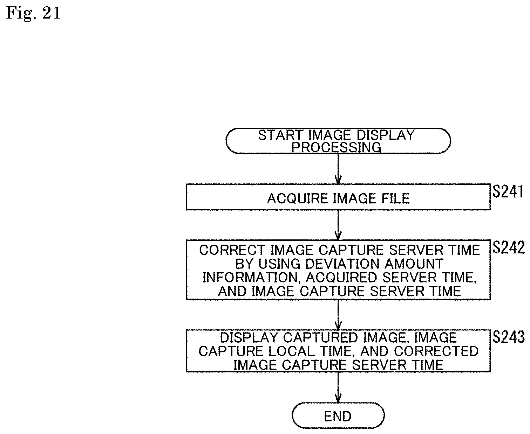

   Fig. 21 is a flowchart illustrating an example of the flow of image display processing.
[Fig. 22]

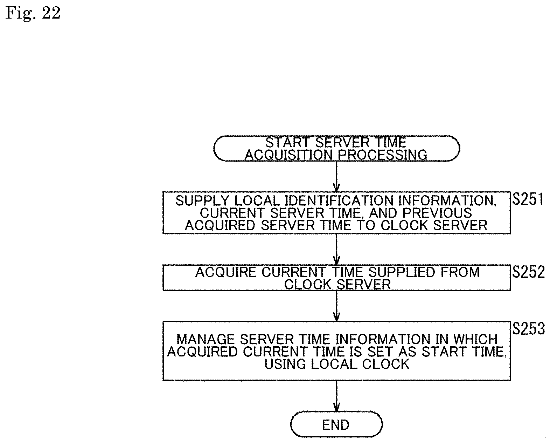

   Fig. 22 is a flowchart illustrating an example of the flow of server time acquisition processing.
[Fig. 23]

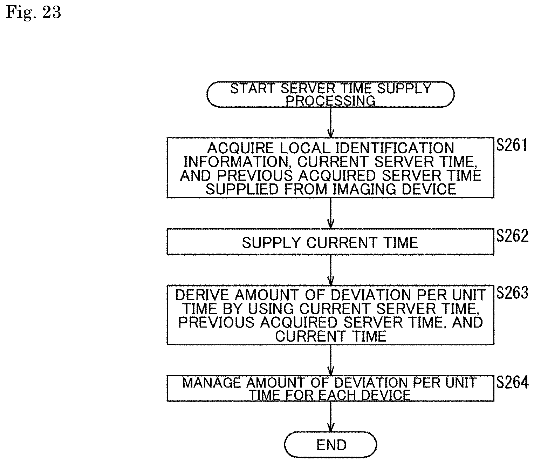

   Fig. 23 is a flowchart illustrating an example of the flow of server time supply processing.
[Fig. 24]

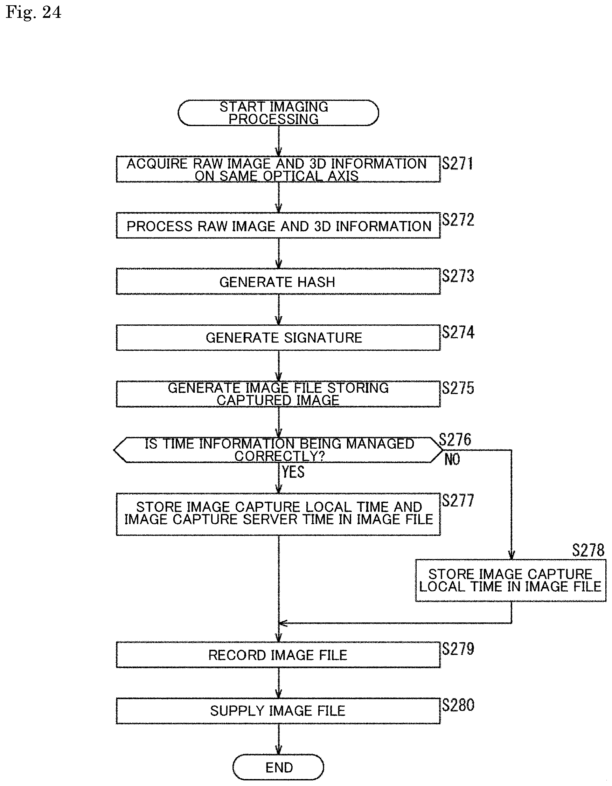

   Fig. 24 is a flowchart illustrating an example of the flow of imaging processing.
[Fig. 25]

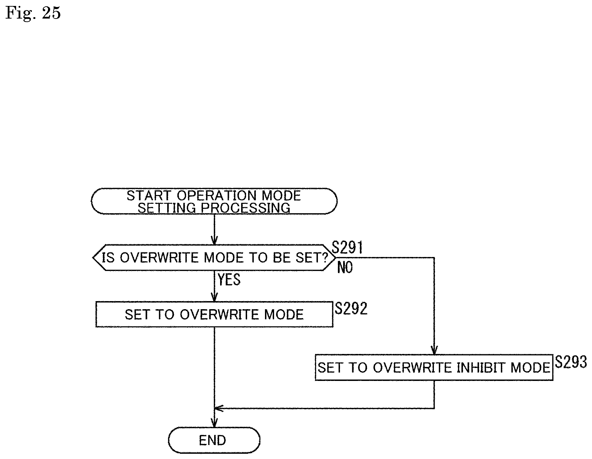

   Fig. 25 is a flowchart illustrating an example of the flow of operation mode setting processing.
[Fig. 26]

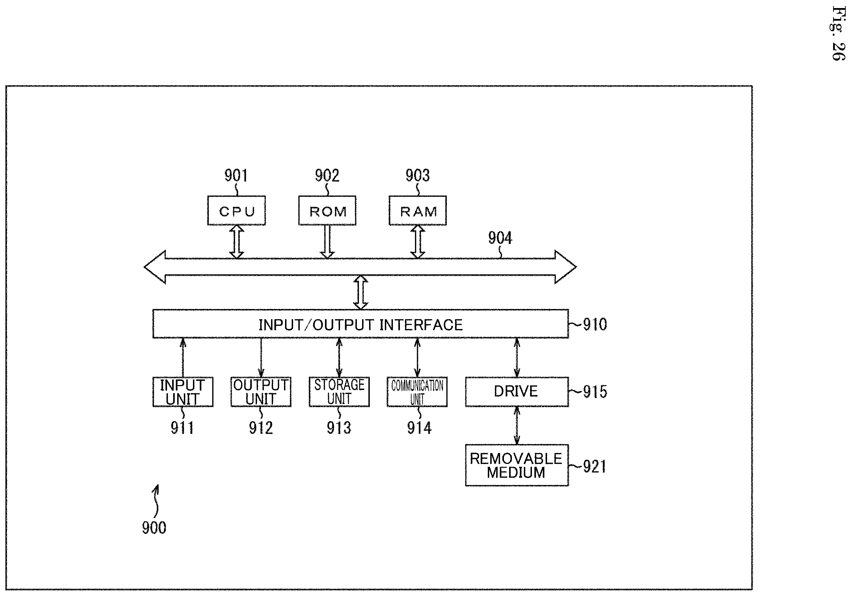

   Fig. 26 is a block diagram illustrating an example of the main configuration example of a computer.

### [Description of Embodiments]

Modes for carrying out the present disclosure (hereinafter referred as embodiments) will be described below. The description will be made in the following order.
1. Literature Supporting Technical Contents and Technical Terms
2. Captured Image and Image Capture Time
3. Transmission of Image Capture Local Time and Image Capture Server Time
4. First Embodiment (Image Processing System)
5. Supplementary Notes

### <1. Literature Supporting Technical Contents and Technical Terms>

The scope disclosed in the present technology is not limited to the content described in the embodiments and also includes the content described in the following patent literature and the like that were publicly known at the time of filing, the content of other literature referred to in the following patent literature, and the like.

### PTL 1: (described above)

In other words, the content of the patent literature and the content of other literature referred to in the patent literature described above are also grounds for determining support requirements.

### <2. Captured Image and Image Capture Time>

### <Use of Time Information>

As used herein, a time is a value indicating timing, and the unit of the value may include any unit related to time, such as year, month, week, day, hour, minute, and second. In addition, time information includes any information that may indicate such a time. Hitherto, there has been a method in which an imaging device or the like stores an image capture time indicating the timing of generation of a captured image in a file together with the captured image (i.e., adds the image capture time to the captured image). In this case, for example, in order to generate this image capture time, there has been a method in which time information for which a user or the like is allowed to set a time is managed in the imaging device. Hereinafter, this time information is also referred to as local time information. The image capture time indicated by the local time information is also referred to as image capture local time. The time set by the user or the like is also referred to as set local time.

The local time information is managed, in which the time set by the user or the like (set local time) is set as a start time, using a clock signal obtained by a crystal oscillator included in the imaging device. In other words, the time is advanced from the start time (set local time) in synchronization with the clock signal. In the following, this clock signal is also referred to as the local clock.

Since the time in this local time information can be set by the user or the like, it is easy to synchronize image capture times (match the times) among imaging devices. Thus, by synchronizing the times among a plurality of imaging devices before image capture, the image capture times of captured images generated by the imaging devices can be synchronized with each other. Thus, the pieces of local time information of the imaging devices are unified with a predetermined accuracy. Therefore, using the image capture local times makes it possible to more easily sort captured images generated by a plurality of imaging devices based on the image capture times.

This matching of times may be performed by any method. For example, wired communication or wireless communication may be performed among the imaging devices to match the times. Such a method achieves higher accuracy matching of times. However, stricter conditions for achieving this are required such as requiring a communication function or a stable communication environment. The user of each imaging device may also manually adjust the time. For example, the same set local time may be set in each imaging device, and management (progress of time) may start simultaneously (at the same timing). Such a method allows for easy and inexpensive matching of times without requiring any communication. Such a method easily achieves matching of times as long as it is performed with an accuracy of about one tenth of a second.

However, the time in the local time information can be easily falsified. In other words, a time different from the actual time can easily be set as the set local time. This may reduce the accuracy of the image capture local time. Therefore, in reality, it has been difficult to guarantee the accuracy of the image capture local time. The accuracy refers to the smallness of discrepancy between the local time information and standard time information. The smaller the amount of discrepancy from the standard time information, the more accurate (with high accuracy) the local time information (image capture local time). In other words, the greater the amount of discrepancy from the standard time information, the lower accurate (with low accuracy) the local time information (image capture local time). For example, there are methods for determining the authenticity of a captured image based on an image capture time. However, since the accuracy of an image capture local time is not guaranteed as described above, it has been difficult in practice to use the image capture local time in such methods.

In contrast to this, there has been a method in which an imaging device acquires the current time from a clock server or the like that manages the standard time information, and manages time information based on the current time to generate an image capture time. Hereinafter, this time information is also referred to as server time information. The image capture time indicated by this server time information is also referred to as image capture server time. The current time acquired from the clock server or the like (i.e., the time at which the current time was acquired, indicated by the server time information) is also referred to as acquired server time.

In the imaging device, the time in this server time information has been managed in such a way that does not allow the user or the like to change that time. Therefore, it is possible to guarantee the accuracy of the image capture server time (server time information) with a certain degree of precision. The accuracy refers to the smallness of discrepancy between the server time information and the standard time information, as with the local time information. In other words, an image capture server time can be used as a more accurate image capture time of a captured image. Therefore, for example, the image capture server time can be used to determine the authenticity of the captured image.

However, the time information in the imaging device is managed using a clock signal generated by a crystal oscillator included in the imaging device, and the accuracy of the time information is generally not high enough and depends on the individual device. Therefore, as time passes from day to month to year, there is a risk that the accuracy of the server time information will be reduced (i.e., the amount of discrepancy between the server time information and the standard time information will increase). In other words, as time passes from the acquired server time, there is a risk that the accuracy of the correspondence even between imaging devices will be reduced (i.e., the amount of discrepancy in the server time information among the imaging devices will increase). Generally, when sorting captured images generated by a plurality of imaging devices based on their image capture times, the correspondence between the image capture times of the imaging devices requires higher accuracy than when the image capture times are used for authenticity determination. Therefore, when the accuracy of the correspondence of server time information between the imaging devices is reduced as described above, it is difficult to make the accuracy of the correspondence between the image capture server times of the imaging devices high enough to be used for sorting the captured images.

Thus, when sorting the captured images generated by the plurality of imaging devices based on their image capture server times, there is a risk that the precision (accuracy) of the sorting will be reduced. In other words, in order to perform the sorting accurately, it is necessary to perform a complicated operation such as sorting the captured images manually while taking into consideration information other than the image capture times (e.g., the contents of the captured images). Therefore, in reality, it is difficult to use the image capture server times to sort the captured images generated by the plurality of imaging devices.

In other words, in these methods, it is difficult to suppress a reduction in accuracy of an image capture time added to a captured image and to suppress a reduction in the accuracy of synchronization of the image capture times among imaging devices. Therefore, there is a risk that the accuracy of the determination of authenticity of a captured image based on an image capture time will be reduced, the sorting accuracy of captured images based on image capture times will be reduced, or the ease of the work will decrease. As a result, there is a risk that the usability (ease of use) of a captured image will become poor.

### <3. Transmission of Image Capture Local Time and Image Capture Server Time>

### <Method 1>

Therefore, as indicated in the top row of a table in Fig. 1, local time information and server time information are managed, and an image capture time based on each piece of time information is stored in a file together with a captured image (Method 1).

For example, a first image processing device (imaging device) includes: a setting unit that sets a first time (set local time); an acquisition unit that acquires a second time (acquired server time) supplied from a server (such as a clock server); a time management unit that manages, using a local clock generated in the first image processing device, first time information (local time information) in which the set first time is set as a start time and second time information (server time information) in which the acquired second time is set as a start time; an imaging unit that captures an image of a subject to generate a captured image; and a file generation unit that generates a file storing the captured image, a first image capture time (image capture local time) indicating a timing of generation of the captured image by using the first time information, and a second image capture time (image capture server time) indicating the timing of generation of the captured image by using the second time information.

In the first image processing device (imaging device), a first time is set; a second time supplied from a server is acquired; first time information in which the set first time is set as a start time and second time information in which the acquired second time is set as a start time are managed using a local clock generated in the first image processing device; an image of a subject is captured to generate a captured image; and a file is generated storing the captured image, a first image capture time indicating a timing of generation of the captured image by using the first time information, and a second image capture time indicating the timing of generation by using the second time information.

The local time information (first time information) is time information for which the user or the like is allowed to set the set local time (first time). The imaging device may include an interface (input unit) that receives input related to settings for the imaging device. The server time information (second time information) is time information based on the acquired server time (second time) acquired from the clock server or the like that manages and provides standard time information (global clock). The imaging device manages this server time information in such a way that does not allow the user or the like to set that server time information. The imaging device may include an interface (such as a communication unit) that acquires the acquired server time supplied from the clock server or the like. The timing for acquiring the acquired server time may be any timing.

The imaging device manages the local time information and the server time information, using the local clock. Here, "managing" means to advance the time. For example, for the local time information, the imaging device advances the time, with the set local time set by the user or the like being set as a start time, using the local clock. Also, for the server time information, the imaging device advances the time, with an acquired server time (the current time indicated by the standard time information) acquired from the clock server or the like being set as a start time, using the local clock.

When the imaging device captures an image of a subject to generate a captured image, the imaging device indicates the timing of generation of the captured image (image capture time) by using the local time information and the server time information. In other words, the imaging device generates information (image capture local time) indicating the image capture time in the local time information and information (image capture server time) indicating the image capture time in the server time information. The imaging device stores the generated information in a file together with the captured image.

Then, the file is supplied to a display device (second image processing device) via a communication medium or a storage medium. The display device acquires the file and displays the captured image, the local image capture time, and the image capture server time, which are stored in the file.

For example, a second image processing device (display device) includes: a file acquisition unit that acquires a file storing a captured image generated by an imaging device (first image processing device), a first image capture time (image capture local time) indicating a timing of generation of the captured image by using first time information (local time information), and a second image capture time (image capture server time) indicating the timing of generation of the captured image by using second time information (server time information); and a display processing unit that displays the captured image, the first image capture time, and the second image capture time.

In the second image processing device (display device), a file is acquired in which a captured image generated by an imaging device, a first image capture time indicating a timing of generation of the captured image by using first time information, and a second image capture time indicating the timing of generation by using second time information are stored; and the captured image, the first image capture time, and the second image capture time are displayed.

The first time information (local time information) is time information in which a first time (set local time) set in the imaging device (first image processing device) is set as a start time and which is managed using a local clock generated in the imaging device. The second time information (server time information) is time information in which a second time (acquired server time) supplied to the imaging device from a server (such as a clock server) is set as a start time and which is managed using the local clock.

For example, based on the image capture server time (second image capture time) thus displayed, the user of the display device can determine the authenticity of the displayed captured image (whether or not it has been falsified or the possibility of it being falsified, etc.). For example, if the image capture server time is an impossible time for the content of the captured image, the user can suspect that the captured image may have been falsified. As described above, the server time information (second time information) is managed in such a way that does not allow the use and the like to change that server time information. Therefore, the accuracy of the image capture server time (server time information) can be guaranteed with a certain degree of precision. This allows the user to more accurately determine the authenticity of the captured image.

Based on the captured local time (first captured time) thus displayed, the user of the display device can also sort captured images generated by a plurality of imaging devices whose pieces of local time information (first time information) have been matched with each other. As described above, the pieces of local time information can be easily synchronized among the imaging devices. Therefore, using the image capture local times makes it possible to more easily and more accurately sort the captured images generated by the plurality of imaging devices based on the image capture times.

Thus, it is possible to suppress a reduction in the accuracy of the image capture time added to the captured image and to suppress a reduction in the accuracy of the matching of the image capture times among the imaging devices, i.e., it is possible to suppress a reduction in the usability of the captured image.

The display device may determine the authenticity of a captured image based on the local image capture time and the image capturing server time.

For example, the second information processing device (display device) may further include an authenticity determination unit that determines the authenticity of a captured image based on the first image capture time (image capture local time) and the second image capture time (image capture server time). Accordingly, the display processing unit may be configured to display a result of determining the authenticity.

With such a configuration, the display device can more accurately determine the authenticity of the captured image. In other words, the user of the display device can confirm a more accurate result of determining the authenticity of the captured image.

The imaging device may generate an electronic signature for the image capture local time and the image capture server time.

For example, the first information processing device (imaging device) may further include a signature generation unit that generates an electronic signature for the captured image, the first image capture time (image capture local time), and the second image capture time (image capture server time). Accordingly, the file generation unit may be configured to store the generated electronic signature in the file.

With such a configuration, the imaging device can prevent falsification of the image capture local time and the image capture server time.

### <Method 1-1>

In the case where Method 1 described above is applied, as indicated in the second row from the top of the table in Fig. 1, the time when a server time was acquired (acquired server time) may be stored in the file (Method 1-1).

For example, in the first image processing device (imaging device), the file generation unit may be configured to store, in the file, the second time (acquired server time) indicating a timing of acquisition.

The clock server or the like supplies the current time in the standard time information to the terminal side. The imaging device acquires that current time. As described above, in the imaging device, the current time is used as a start time in the server time information. In other words, the current time can also be said to be the time in the server time information that indicates the timing at which the current time was acquired. Therefore, the current time is also referred to as the acquired server time. Accordingly, the imaging device may hold the acquired server time (the current time in the standard time information acquired from the clock server or the like). Accordingly, the imaging device may store the acquired server time in a file together with the captured image, the image capture local time, the image capture server time, and so on. The imaging device may then provide the file to the display device or the like.

For example, when acquiring the file, the display device may perform processing using the acquired server time stored in the file. This acquired server time may be used in any way. For example, the display device may use the acquired server time to determine the reliability of the image capture server time. The display device may display a result of determining the reliability.

For example, the second image processing device (display device) may further include a reliability determination unit that determines the reliability of the second image capture time (image capture server time). Accordingly, the display processing unit may be configured to display the reliability as determined.

As described above, the accuracy of the server time information may decrease as more time passes from the acquired server time. Therefore, the display device may determine the reliability of the image capture server time based on, for example, the length of time between the acquired server time and the image capture server time. For example, it may be determined that the longer the amount of time between the acquired server time and the image capture server time, the lower the reliability of the image capture server time. With such a configuration, the display device can present the reliability of the image capture server time. In other words, the user of the display device can more easily confirm the reliability of the image capture server time.

The image capture server time may be corrected based on the acquired server time. For example, the display device may display the image capture server time corrected based on the acquired server time. Here, "correcting" refers to processing for reducing the amount of discrepancy from the standard time information. In other words, correcting the image capture server time refers to processing for bringing the image capture server time closer to the image capture time indicated by the standard time information.

The amount of deviation between the image capture server time and the image capture time in the standard time information can be derived based on the amount of time between the acquired server time and the image capture server time and the amount of deviation of the local clock per unit time. Therefore, by correcting the image capture server time with the derived amount of deviation, the time can be brought closer to the image capture time based on the standard time information.

For example, in the second information processing device (display device), the second time (acquired server time) may be stored in the file. Accordingly, the display processing unit may be configured to display the second image capture time (image capture server time) corrected based on the amount of deviation of the local clock per unit time and the second time.

The amount of deviation of the local clock per unit time may be managed by any device. For example, the imaging device may manage the amount of deviation per unit time. The clock server or the like may manage the amount of deviation per unit time.

In the case where the clock server manages the amount of deviation, the clock server may manage, for each device, the amount of deviation of the local clock per unit time.

For example, an information processing device (clock server) includes a deviation amount management unit that manages, for each of the other devices, an amount of deviation of a local clock generated in the other device per unit time.

In the information processing device (clock server), for each of the other devices, the amount of deviation of the local clock generated in each device per unit time is managed.

With such a configuration, the clock server can more easily supply the amount of deviation of the local clock per unit time in a requested (specified) device.

In a case where the imaging device serves a manager, the imaging device may manage the amount of deviation of its own local clock per unit time. With such a configuration, the imaging device can more easily supply the amount of deviation of its own local clock per unit time.

The amount of deviation of the local clock per unit time may be derived in any device. For example, the imaging device may derive the amount of deviation per unit time. The clock server may derive the amount of deviation per unit time.

The image capture server time may be corrected in any device. For example, the display device may correct the image capture server time based on the acquired server time and the amount of deviation of the local clock per unit time. The clock server may correct the image capture server time based on the acquired server time and the amount of deviation of the local clock per unit time.

The imaging device may generate an electronic signature for the acquired server time. For example, the first information processing device (imaging device) may further include a signature generation unit that generates an electronic signature for the captured image, the first image capture time (image capture local time), the second image capture time (image capture server time), and the second time (acquired server time). Accordingly, the file generation unit may be configured to store the generated electronic signature in the file. With such a configuration, the imaging device can prevent falsification of the acquired server time.

### <Method 1-1-1>

In the case where Method 1-1 described above is applied, as indicated in the third row from the top of the table in Fig. 1, local identification information may be stored in the file (Method 1-1-1). As used herein, the local identification information refers to identification information for identifying an imaging device.

For example, in the first image processing device (imaging device), the file generation unit may be configured to store identification information (local identification information) for identifying the device in the file.

By local identification information being stored in the file (added to a captured image) in this way, a device that processes the file (e.g., the display device) can more easily identify, based on the local identification information, the device that has generated the captured image stored in the file.

When the clock server manages the amount of deviation of the local clock per unit time and the display device corrects the image capture server time, the display device may request, using the local identification information (or the file in which the local identification information is stored), the amount of deviation of the local clock per unit time in the imaging device. The clock server may supply, based on the local identification information, the requested amount of deviation of the local clock per unit time in the imaging device to the display device. The display device may correct the image capture server time based on the amount of deviation of the local clock per unit time in the imaging device and the acquired server time, and display the corrected image capture server time and the image capture local time.

For example, the information processing device (clock server) may further include a deviation amount information supply unit that supplies deviation amount information indicating an amount of deviation of a local clock per unit time in a specified other device (imaging device) to a display device that displays a captured image generated in the other device.

For example, the second image processing device (display device) may further include: a deviation amount information acquisition unit that acquires deviation amount information indicating an amount of deviation of a local clock per unit time from a server (such as the clock server); and an image capture time correction unit that corrects a second image capture time (image capture server time) based on the acquired deviation amount information and a second time (acquired server time).

With such a configuration, the clock server can more easily supply, to display device, the amount of deviation of the local clock per unit time in the requested device. In addition, the display device can display the image capture time more accurately.

When the clock server manages the amount of deviation of the local clock per unit time, and the clock server corrects the image capture server time by itself, the display device may request the clock server to correct the image capture server time by using its own local identification information, the acquired server time, and the image capture server time (or the file in which they are stored). The clock server may identify, based on the local identification information, the amount of deviation of the local clock per unit time in the requested imaging device. Accordingly, the clock server may correct the image capture server time based on the amount of deviation per unit time and the acquired server time. Accordingly, the clock server may supply the corrected image capture server time to the display device. The display device may acquire and display the corrected image capture server time.

For example, the information processing device (clock server) may further include: an image capture time correction unit that corrects, by using an amount of deviation of a local clock per unit time in a specified other device, an image capture time of a captured image generated in the other device; and an image capture time supply unit that supplies the corrected image capture time to a display device that displays the captured image.

For example, the second image processing device (display device) may further include an image capture time acquisition unit that acquires the corrected second image capture time (image capture server time) from a server (such as the clock server).

With such a configuration, the clock server can correct the image capture server time more accurately. Thus, the clock server can provide a more accurate image capture server time. In addition, the display device can display the image capture time more accurately.

The imaging device may generate an electronic signature for the local identification information. For example, the first information processing device (imaging device) may further include a signature generation unit that generates an electronic signature for the captured image, the first image capture time (image capture local time), the second image capture time (image capture server time), the second time (acquired server time), and the local identification information. Accordingly, the file generation unit may be configured to store the generated electronic signature in the file. With such a configuration, the imaging device can prevent falsification of the local identification information.

### <Method 1-1-2>

In the case where Method 1-1 described above is applied, as indicated in the fourth row from the top of the table in Fig. 1, deviation amount information may be stored in the file (Method 1-1-2). As used herein, the discrepancy amount information indicates an amount of deviation of a local clock per unit time.

For example, in the first image processing device (imaging device), the file generation unit may be configured to store, in the file, deviation amount information indicating the amount of deviation of the local clock per unit time.

By the deviation amount information being stored in the file (added to a captured image) in this way, a device that processes the file (e.g., the display device) can more easily acquire the amount of deviation of the local clock per unit time.

In this case, the amount of deviation of the local clock per unit time may be derived by any device. For example, the imaging device may derive the amount of deviation of its own local clock per unit time. In that case, the imaging device may derive the amount of deviation of the local clock per unit time from the current time in the server time information (also referred to as the current server time), the previous acquired server time, and the current acquired server time. Specifically, the imaging device derives the amount of time between the previous acquired server time and the current server time (an amount of time based on the server time information), derives the amount of deviation between the current server time and the current acquired server time (the amount of discrepancy of the current time between the standard time information and the server time information), and derives, based on the derived amounts, the amount of deviation of the local clock per unit time. The imaging device may acquire the amount of deviation of its own local clock per unit time from the clock server or the like.

The display device may correct the image capture server time based on the deviation amount information and the acquired server time, which are thus stored in the file, and display the corrected image capture server time.

For example, the file may store deviation amount information indicating the amount of deviation of the local clock per unit time and the second time (acquired server time), and the second image processing device (display device) may further include an image capture time correction unit that corrects the second image capture time (image capture server time) based on the deviation amount information and the second time.

With such a configuration, the display device can more easily correct the image capture server time.

The imaging device may generate an electronic signature for the deviation amount information. For example, the first information processing device (imaging device) may further include a signature generation unit that generates an electronic signature for the captured image, the first image capture time (image capture local time), the second image capture time (image capture server time), the second time (acquired server time), and the deviation amount information. Accordingly, the file generation unit may be configured to store the generated electronic signature in the file. With such a configuration, the imaging device can prevent falsification of the deviation amount information.

### <Method 1-1-3>

In the case where Method 1-1 described above is applied, as indicated in the fifth row from the top of the table in Fig. 1, when acquiring the current time (current acquired server time) from a server, local identification information, the current server time, and the previous acquired server time may be provided (Method 1-1-3).

For example, in the first image processing device (imaging device), the acquisition unit may be configured to supply, when acquiring the second time (current acquired server time), to the server (such as the clock server), identification information (local identification information) for identifying the device, the current time (current server time) indicated by the second time information (server time information), and the second time (previous acquired server time) indicating the timing of the previous acquisition.

With such a configuration, the imaging device can more easily provide the above-mentioned information to the clock server or the like.

The clock server may use the current server time and the previous acquired server time, which are supplied from the imaging device, and the current time of the clock server (i.e., the current acquired server time) to derive the amount of deviation of the local clock per unit time in the imaging device. Accordingly, the clock server may manage a derived amount of deviation per unit time for each device (linked to local identification information).

For example, the information processing device (clock server) may further include: an acquisition unit that, when supplying a first current time (acquired server time currently being supplied) to another device (imaging device), acquires, identification information (local identification information) for identifying the other device, a second current time (acquired server time previously supplied) that has been previously supplied to the other device, and a third current time (current server time) indicated by time information (server time information) managed by the other device using a local clock with the second current time as a start time; and a deviation amount derivation unit that derives an amount of deviation per unit time by using the first current time and the acquired second current time and third current time. Accordingly, the deviation amount management unit may be configured to use the acquired identification information to manage the derived amount of deviation per unit time for each of the other devices.

With such a configuration, the clock server can more easily derive the amount of deviation of the local clock per unit time. The clock server can also more easily manage the amount of deviation of the local clock per unit time for each device.

### <Method 1-2>

In the case where Method 1 described above is applied, as indicated in the sixth row from the top of the table in Fig. 1, if the imaging device cannot manage any time information, time information may no longer be stored (Method 1-2). For example, if the local time information or the server time information cannot advance normally due to, for example, a built-in secondary battery of the imaging device running out, the accuracy (or reliability) of such time information may be reduced. Therefore, such image capture times with low reliability (low accuracy) may not be stored in the file (may no longer be stored in the file).

For example, in the first image processing device (imaging device), the time management unit may be configured to no longer store the second image capture time in the file if the time management unit cannot manage the second time information.

With such a configuration, it is possible to prevent information with low reliability or accuracy from being stored in the file. In other words, it is possible to suppress a reduction in the accuracy or reliability of the file (i.e., the information in the file).

### <Method 1-3>

In the case where Method 1 described above is applied, as indicated in the seventh row from the top of the table in Fig. 1, server time information may be acquired at startup, operation stop, or network connection (Method 1-3). The imaging device may acquire the current time (acquired server time) from the clock server or the like at any timing. For example, it may be acquired when the imaging device starts up, stops operation (shuts down), or connects to a network.

For example, in the first image processing device (imaging device), the acquisition unit may be configured to acquire the second time (acquired server time) when the device starts up, stops operation, or connects to a network.

The imaging device may periodically acquire the current time (acquired server time) from the clock server or the like during a period when the imaging device can connect to the network. The imaging device may also acquire the current time (acquired server time) from the clock server or the like at a timing based on an instruction from the user or the like.

### <Method 1-4>

In the case where Method 1 described above is applied, as indicated in the eighth row from the top of the table in Fig. 1, server time information may be acquired through encrypted communication (Method 1-4).

For example, the information processing device (clock server) may further include a current time suppl unit that supplies the current time (acquired server time) to another device (imaging device) through encrypted communication.

For example, in the first image processing device (imaging device), the acquisition unit may acquire and decrypt encrypted second time (acquired server time).

With such a configuration, it is possible to prevent falsification of the acquired server time (the current time in the standard time information) supplied from the clock server to the imaging device.

### <Method 1-5>

In the case where Method 1 described above is applied, as indicated in the ninth row from the top of the table in Fig. 1, the local time information may be overwritten with the server time information (Method 1-5). In other words, the imaging device may have a function for overwriting local time information with server time information.

For example, in the first image processing device (imaging device), the setting unit may be configured to set the first time (set local time) by using the second time information (server time information).

### <Method 1-5-1>

In the case where Method 1-5 described above is applied, as indicated in the bottom row of the table in Fig. 1, a setting may be provided to overwrite the local time information with the server time information (Method 1-5-1). Specifically, the imaging device may have, as operation modes, a mode in which the local time information is overwritten with the server time information and a mode in which the local time information is not overwritten, to allow the user or the like to select either operation mode.

For example, in the first image processing device (imaging device), the setting unit may be configured to select, based on a user instruction, whether or not to use the second time information (server time information) to set the first time (set local time).

With such a configuration, the user and the like can more easily overwrite the local time information with the server time information.

### <Combination>

Each of the methods described above in <3. Transmission of Image Capture Local Time and Image Capture Server Time> may be applied in combination with any other method as long as no contradiction occurs. Three or more methods may be applied in combination. For example, any two or more of Methods 1-1 to 1-5 may be applied in combination. Possible ways of combination include not only those indicated in the table of Fig. 1 as "Method" but also all the elements described above in <3. Transmission of Image Capture Local Time and Image Capture Server Time>. Each of the methods described above may be applied in combination with other methods other than those described above.

As used herein, the description made for a higher level method also applies to lower level methods belonging to that higher level method, as long as no contradiction occurs. For example, when it is described that "Method 1 may be applied", each of Methods 1-1 to 1-5 can be applied. When it is described that "Method 1 may be applied", Method 1-1 may be applied, and each of Methods 1-1-1 to 1-1-3 may also be applied.

### <4. First Embodiment>

### <Image Processing System>

The present technology can be applied to an image processing system (or each device constituting the system) that processes captured images. Fig. 2 is a system diagram illustrating an example of the configuration of an image processing system to which the present technology is applied. The image processing system 100 illustrated in Fig. 2 is a system that processes captured images.

Fig. 2 illustrates principal components such as device configuration and data flows, and Fig. 2 does not illustrate all components. In other words, the image processing system 100 may include devices not illustrated in Fig. 2 and may include processing and data flows not illustrated as arrows or the like in Fig. 2.

As illustrated in Fig. 2, the image processing system 100 includes an imaging device 111, a display device 112, and a clock server 113, which are communicably connected to each other via a network 110. Although Fig. 2 illustrates one imaging device 111, one display device 112, and one clock server 113, each of these may be provided by any number of devices/servers. In other words, there may be two or more imaging devices 111, two or more display devices 112, and two or more clock servers 113. The numbers of imaging devices 111, display devices 112, and clock servers 113 do not need to be the same. Although Fig. 2 illustrates one network as the network 110, the image processing system 100 may include a plurality of networks.

The network 110 is a communication network that serves as a communication medium between the devices. The network 110 may be a wired communication network, a wireless communication network, or both. For example, the network 110 may be a wired local area network (LAN), a wireless LAN, a public telephone line network, a wide area communication network for wireless mobile devices such as a so-called 4G network or 5G network, or the Internet, or a combination thereof. The network 110 may be a single communication network or a plurality of communication networks. For example, the network 110 may be partially or entirely made up of a communication cable of a predetermined standard, such as a Universal Serial Bus (USB) (registered trademark) cable or a High-Definition Multimedia Interface (HDMI) (registered trademark) cable.

The imaging device 111 captures an image of a subject, that is, performs processing related to generation of a captured image. For example, the imaging device 111 may manage local time information. The imaging device 111 may manage server time information. The imaging device 111 may capture an image of a subject to generate a captured image. The imaging device 111 may generate an image file that stores the captured image and the like.

The display device 112 performs processing related to display of captured images and the like. For example, the display device 112 may acquire an image file. The display device 112 may determine the authenticity of a captured image stored in the image file. The display device 112 may determine the reliability of an image capture server time stored in the image file. The display device 112 may correct the image capture server time stored in the image file. The display device 112 may display captured images and the like.

The clock server 113 performs processing related to management of standard time information. For example, the clock server 113 may manage clock server time information (standard time information).

The imaging device 111, the display device 112, and the clock server 113 may communicate with each other via the network 110 to exchange information. For example, as indicated by a dashed double-headed arrow 121, the imaging device 111 may supply the local identification information, the current server time, and the previous acquired server time to the clock server 113. In response to this, the clock server 113 may supply the current time (acquired server time) in the standard time information to the imaging device 111.

As indicated by a dashed arrow 122, the imaging device 111 may supply the image file to the display device 112. The display device 112 may acquire that image file. For example, this image file may store a captured image. The image file may store the image capture local time. The image file may store the image capture server time. The image file may store the acquired server time. The image file may include local identification information. The image file may store deviation amount information.

As indicated by a dashed double-headed arrow 123, the display device 112 may supply, to the clock server 113, the local identification information and the image capture server time, which are stored in the image file supplied from the imaging device 111. In response to this, the clock server 113 may supply deviation amount information or corrected image capture server time to the display device 112.

### <Imaging Device>

The imaging device 111 is configured by an information processing terminal device having an imaging function, such as an electronic camera, a smartphone, a tablet terminal, or a laptop personal computer. The imaging device 111 may be configured by one device (electronic device), or may be configured by a plurality of devices (electronic devices). For example, the imaging device 111 may be configured by an electronic camera and a smartphone. In that case, for example, the digital camera may generate captured images, and the smartphone may generate signatures for the captured images and supply them to the display device 112. In the following, the imaging device 111 will be described as being configured by one device (electronic device).

Fig. 3 is a block diagram illustrating an example of the configuration of the imaging device 111 serving as one aspect of an image processing device to which the present technology is applied.

Fig. 3 illustrates main processing units and data flows. The present disclosure is not limited to those illustrated in Fig. 3. In other words, the imaging device 111 may include processing units not illustrated as blocks in Fig. 3, and there may be processing and data flows not indicated as arrows or the like in Fig. 3.

As illustrated in Fig. 3, the imaging device 111 includes a control unit 201, an imaging processing unit 202, an input unit 203, and an output unit 204. The control unit 201 controls each processing unit in the imaging processing unit 202. The imaging processing unit 202 performs processing related to capture of images under the control of the control unit 201. The input unit 203 includes input devices such as buttons and switches. The input unit 203 receives an input such as an instruction from the user or the like via the input device. The input unit 203 supplies the received instruction and so on to the control unit 201. The control unit 201 may control the imaging processing unit 202 based on the received instruction and so on. The output unit 204 includes output devices such as a monitor and a speaker. The output unit 204 outputs information supplied from the control unit 201 via the output device(s) as, for example, images and sound. The control unit 201 may supply any information, such as a control result, to the output unit 204 to output the information.

The imaging processing unit 202 includes a time setting unit 211, a time acquisition unit 212, and a time management unit 213.

The time setting unit 211 performs processing related to setting of local time information. For example, the time setting unit 211 may set the set local time in accordance with a user instruction received by the input unit 203 under the control of the control unit 201. The time setting unit 211 may supply the set local time thus set to the time management unit 213.

The time acquisition unit 212 performs processing related to acquisition of acquired server time. The time acquisition unit 212 has a communication function for communicating with the clock server 113 via the network 110. For example, the time acquisition unit 212 may use the communication function to acquire the current time (i.e., the acquired server time) in the standard time information supplied from the clock server 113. The time acquisition unit 212 may supply the acquired server time to the time management unit 213.

The time management unit 213 performs processing related to management of time information. The time management unit 213 includes a crystal oscillator, uses the crystal oscillator to generate a local clock, and uses the local clock to manage time information. For example, the time management unit 213 may use the local clock to manage local time information in which the set local time supplied from the time setting unit 211 is set as a start time. In other words, the time management unit 213 may advance the time from the set local time using the local clock. The time management unit 213 may use the local clock to manage server time information in which the acquired server time supplied from the time acquisition unit 212 is set as a start time. In other words, the time management unit 213 may advance the time from the acquired server time using the local clock.

The time management unit 213 may acquire a notification indicating a timing at which a captured image is generated by a sensor unit 222 (i.e., image capture timing), and set the image capture time in each of the local time information and the server time information according to the notification. In other words, the time management unit 213 may set an image capture local time and an image capture server time. The time management unit 213 may supply the set image capture local time and image capture server time to the image file generation unit 231. When generating an electronic signature for the image capture local time and the image capture server time, the time management unit 213 may supply the set image capture local time and image capture server time to a hash processing unit 228.

The time management unit 213 may supply other information, such as the acquired server time, local identification information, and deviation amount information, to the image file generation unit 231. When generating an electronic signature for other information, the time management unit 213 may supply the other information to the hash processing unit 228.

The imaging device 111 also includes an optical system 221, the sensor unit 222, a RAW processing unit 223, a YUV processing unit 224, a reduced image generation unit 225, an image information addition unit 226, a 3D information processing unit 227, the hash processing unit 228, a signature control unit 229, a signature generation unit 230, an image file generation unit 231, an image file recording unit 232, and an image file supply unit 233.

The optical system 221 is composed of optical elements such as a lens, a mirror, a filter, and a diaphragm, exerts a predetermined influence on light rays from a subject, and guides the light ray to the sensor unit 222. Thus, the light rays from the subject are incident the sensor unit 222 via this optical system 221.

The sensor unit 222 performs processing related to photoelectric conversion. The sensor unit 222 includes an image sensor 241 and a 3D information sensor 242. For example, the sensor unit 222 may generate a captured image or 3D information by using light rays from a subject that are incident thereon via the optical system 221.

The image sensor 241 performs processing related to generation of a captured image. The image sensor 241 has a pixel array in which pixels having photoelectric conversion elements are arranged in a matrix. For example, the image sensor 241 may receive light rays from a subject that are incident on the pixel array via the optical system 221, and perform photoelectric conversion to generate a captured image (a RAW image or a Joint Photographic Experts Group (JPEG) image generated from the RAW image). In other words, the image sensor 241 captures an image of a subject to generate a captured image of the subject, and therefore can also be called a captured image generation unit. The image sensor 241 may supply the generated captured image to the RAW processing unit 223.

The 3D information sensor 242 detects distance-related information for a plurality of locations within the captured image obtained by the image sensor 241 on the same optical axis as the captured image, and generates 3D information. In other words, the 3D information sensor 242 can also be said to be a 3D information generation unit. For example, the 3D information sensor 242 includes a predetermined sensor device that detects distance-related information. The 3D information sensor 242 receives light rays from a subject that are incident on its own sensor device via the optical system 221, detects distance-related information, and generates 3D information.

Here, the "same optical axis" means that the light rays from the subject that are incident on the 3D information sensor 242 pass through the optical system 221 through which the light rays from the subject that are incident on the image sensor 241 passes. In other words, this means that the paths of the light rays incident on the image sensor 241 and the light rays incident on the 3D information sensor 242 from at least the subject to the sensor unit 222 are the same. Such detection of the captured image and the distance-related information on the same optical axis makes it difficult to perform trick photographing in which a face photograph and others are taken and the distance to a person other than the subject of the face photograph is detected. Thus, there is a high possibility that the subject of the captured image and the subject of the 3D information are the same.

The "distance-related information" may be information indicating the distance from the imaging device 111 (the 3D information sensor 242) to the subject, or may be information for deriving that distance. For example, the distance-related information may include a depth map, phase difference data, Time of Flight (ToF) data, or a collection of parallax images.

The 3D information sensor 242 supplies the generated 3D information to the 3D information processing unit 227.

Although the image sensor 241 and the 3D information sensor 242 are configured as separate bodies in Fig. 3, the image sensor 241 and the 3D information sensor 242 may be integrated, or the image sensor 241 may also serve as the 3D information sensor 242. For example, when the distance-related information is ToF data, the 3D information sensor 242 may be configured by a ToF sensor that measures a distance by a ToF method, separate from the image sensor 241. When the distance-related information is phase difference data, the 3D information sensor 242 may be made up of image plane phase-difference detection pixels formed in an effective pixel area of the pixel array of the image sensor 241. The image plane phase-difference detection pixels are pixels used for a focusing (autofocus) function for a phase difference method, and can detect phase difference data. In this case, the image sensor 241 and the 3D information sensor 242 are integrally configured. The 3D information sensor 242 may be configured by a phase difference sensor that detects phase difference data, separate from the image sensor 241. When the distance-related information is a collection of parallax images generated by, for example, 3D swing panorama shooting, the image sensor 241 also serves as the 3D information sensor 242. In other words, in this case, the image sensor 241 generates a captured image and 3D information, and the 3D information sensor 242 may be eliminated accordingly.

In the following, unless otherwise specified, a case will be described by way of example in which the 3D information sensor 242 is made up of image plane phase-difference detection pixels. In other words, a case will be described by way of example in which the 3D information sensor 242 detects phase difference data as distance-related information.

The RAW processing unit 223 performs processing related to a RAW image. For example, the RAW processing unit 223 may acquire a captured image (RAW image) supplied from the image sensor 241. The RAW processing unit 223 may perform predetermined processing on the RAW image. This processing may be any type of processing. For example, it may be white balance correction. The RAW processing unit 223 may supply the processed RAW image to the YUV processing unit 224.

The YUV processing unit 224 performs processing related to generation of a YUV image. For example, the YUV processing unit 224 may acquire a RAW image supplied from the RAW processing unit 223. The YUV processing unit 224 may convert that RAW image into a YUV image. The YUV processing unit 224 may encode that YUV image and convert the resulting image into a JPEG image. The YUV processing unit 224 may supply the generated JPEG image to the reduced image generation unit 225. When the image sensor 241 outputs a JPEG image as a captured image, the RAW processing unit 223 and the YUV processing unit 224 may be skipped, and the image sensor 241 may then supply that JPEG image to the reduced image generation unit 225.

The reduced image generation unit 225 performs processing related to generation of a reduced image. For example, the reduced image generation unit 225 may acquire a JPEG image supplied from the YUV processing unit 224. The reduced image generation unit 225 may generate a reduced image of that JPEG image. In the following, in contrast to this reduced image, the original JPEG image is also referred to as the "primal image". Any method of generating this reduced image may be used. For example, the reduced image generation unit 225 may generate a reduced image by decimating some pixel values of the primal image. The reduced image generation unit 225 may generate a reduced image by synthesizing pixel values for each predetermined partial area of the primal image to reduce the number of pixels. The reduced image generation unit 225 may create the reduced image based on all the pixels of the primal image. If the number of taps is insufficient, the reduced image generation unit 225 may repeat the reduction by a factor that has enough taps a plurality of times to generate a reduced image of a desired reduction factor. The reduced image generation unit 225 supplies the generated reduced image to the image information addition unit 226 together with the primal image (JPEG image).

The image information addition unit 226 performs processing related to addition of image information. For example, the image information addition unit 226 may acquire a primal image and a reduced image, which are supplied from the reduced image generation unit 225. The image information addition unit 226 may generate image information that is information related to the acquired primal image. The image information addition unit 226 may associate the generated image information with the primal image. In other words, the image information addition unit 226 may generate image information as metadata of the primal image. The image information addition unit 226 may supply the generated image information to the hash processing unit 228 together with the primal image and the reduced image.

The 3D information processing unit 227 performs processing on 3D information. For example, the 3D information processing unit 227 may acquire 3D information supplied from the 3D information sensor 242. The 3D information processing unit 227 may perform predetermined processing on the acquired 3D information. For example, the 3D information processing unit 227 may supply the acquired 3D information to the hash processing unit 228. When a signature is not generated under the control of the signature control unit 229, the 3D information processing unit 227 may reduce the resolution of the acquired 3D information and supply the low-resolution 3D information to the hash processing unit 228. When a signature is generated under the control of the signature control unit 229, the 3D information processing unit 227 may skip reducing the resolution of the 3D information and then supply the acquired 3D information to the hash processing unit 228. The 3D information processing unit 227 can also be said to be a 3D information resolution setting unit. The 3D information processing unit 227 may determine whether or not the subject (distance measurement target) of the acquired 3D information is plane, and supply the determination result to the signature control unit 229. The 3D information processing unit 227 can also be called a plane determination unit.

The hash processing unit 228 performs processing related to hash generation. For example, the hash processing unit 228 may acquire a primal image, a reduced image, and image information, which are supplied from the image information addition unit 226. The hash processing unit 228 may acquire 3D information supplied from the 3D information processing unit 227. The hash processing unit 228 may generate a hash using the primal image, the image information, and the 3D information. The hash processing unit 228 may supply the generated hash to the signature generation unit 230 together with the original image, the reduced image, the image information, and the 3D information.

The hash processing unit 228 may acquire an image capture local time and an image capture server time, which are supplied from the time management unit 213. The hash processing unit 228 may generate a hash using the primal image, the image information, the 3D information, the image capture local time, and the image capture server time. The hash processing unit 228 may supply the generated hash to the signature generation unit 230 together with the primal image, the reduced image, the image information, the 3D information, the image capture local time, and the image capture server time.

The hash processing unit 228 may acquire other information supplied from the time management unit 213, such as an acquired server time, local identification information, and deviation amount information. The hash processing unit 228 may generate a hash using the acquired other information as well as the primal image, the image information, the 3D information, the image capture local time, and the image capture server time. The hash processing unit 228 may supply the generated hash to the signature generation unit 230 together with the primal image, the reduced image, the image information, the 3D information, the image capture local time, the image capture server time, and the other information.

The hash processing unit 228 may be driven under the control of the signature control unit 229. Specifically, when the signature control unit 229 instructs the hash processing unit 228 to generate a hash, the hash processing unit 228 may generate a hash as described above, and when the signature control unit 229 does not instruct the hash processing unit 228 to generate a hash, the hash processing unit 228 may no longer generate a hash. When a hash is no longer generated, the hash processing unit 228 may supply the acquired information (e.g., the primal image, the reduced image, the image information, the 3D information, etc.) to the signature generation unit 230.

The signature control unit 229 performs processing related to control of signature. For example, the signature control unit 229 may control whether or not to generate a signature based on an instruction from a user, an application, or the like input via the control unit 201. The signature control unit 229 may control whether or not to generate a signature based on a result of determining whether or not the subject (distance measurement target) of the 3D information is plane, which is supplied from the 3D information processing unit 227. For example, the signature control unit 229 may control to no longer generate a signature when it is determined that the subject (distance measurement target) of the 3D information is plane. The signature control unit 229 may control to generate a signature when it is determined that the subject (distance measurement target) of the 3D information is not plane. During this control, the signature control unit 229 may control the hash processing unit 228 and the signature generation unit 230 to control whether or not to generate a signature. For example, when controlling to no longer generate a signature, the signature control unit 229 may cause the hash processing unit 228 to no longer generate a hash and the signature generation unit 230 to no longer generate a signature. When controlling to generate a signature, the signature control unit 229 may cause the hash processing unit 228 to generate a hash and the signature generation unit 230 to generate a signature. The signature control unit 229 may supply control information indicating whether or not to generate a signature to the 3D information processing unit 227.

The signature generation unit 230 performs processing related to generation of signature. For example, the signature generation unit 230 may acquire a hash supplied from the hash processing unit 228 and information used to generate the hash (e.g., the primal image, the reduced image, the image information, the 3D information, etc.). The signature generation unit 230 may encrypt the acquired hash using a device private key for the imaging device 111 to generate a signature (electronic signature). In other words, the signature generation unit 230 may generate a signature for information including at least the primal image and the 3D information. Therefore, the signature generation unit 230 can also be called a signature generation unit. The signature generation unit 230 may supply the generated signature to the image file generation unit 231 together with information corresponding to the signature (e.g., the primal image, the reduced image, the image information, the 3D information, etc.).

The signature generation unit 230 may be driven under the control of the signature control unit 229. For example, when the signature control unit 229 instructs the signature generation unit 230 to generate a signature, the signature generation unit 230 may generate a signature as described above. When the signature control unit 229 does not instruct the signature generation unit 230 to generate a signature, the signature generation unit 230 may no longer generate a signature. When a signature is no longer generated, the signature generation unit 230 may supply, to the image file generation unit 231, information (e.g., the primal image, the reduced image, the image information, the 3D information, etc.) supplied from the hash processing unit 228.

The image file generation unit 231 performs processing related to generation of an image file. For example, the image file generation unit 231 may acquire information (e.g., the primal image, the reduced image, the image information, the 3D information, the signature, etc.) supplied from the signature generation unit 230. The image file generation unit 231 may generate an image file in a predetermined format and store the acquired information (e.g., the primal image, the reduced image, the image information, the 3D information, the signature, etc.) in the image file. The image file generation unit 231 may supply the image file to the image file recording unit 232. The image file generation unit 231 may supply the image file to the image file supply unit 233.

The image file recording unit 232 performs processing related to recording of an image file. The image file recording unit 232 includes a drive that drives a removable recording medium, such as a magnetic disk, an optical disk, a magneto-optical disk, or a semiconductor memory, to perform writing and reading. For example, the image file recording unit 232 may acquire an image file supplied from the image file generation unit 231. The image file recording unit 232 may record the acquired image file on a removable recording medium via the drive.

The image file supply unit 233 performs processing related to supply of an image file. The image file supply unit 233 has a communication function for communicating with the display device 112 via the network 110. For example, the image file supply unit 233 may acquire an image file supplied from the image file generation unit 231. The image file supply unit 233 may use the communication function to supply the acquired image file to the display device 112.

### <Display Device>

The display device 112 is configured by an information processing device having an image display function, such as a smartphone, a tablet terminal, a laptop personal computer, a desktop personal computer, a dedicated computer, or a server. The display device 112 may be configured by one device (electronic device), or may be configured by a plurality of devices (electronic devices). In the following, the display device 112 will be described as being configured by one device (electronic device).

Fig. 4 is a block diagram illustrating an example of the configuration of the display device 112 serving as one aspect of an image processing device to which the present technology is applied.

Fig. 4 illustrates main processing units and data flows. The present disclosure is not limited to those illustrated in Fig. 4. In other words, the display device 112 may include processing units not illustrated as blocks in Fig. 4, and there may be processing and data flows not indicated as arrows or the like in Fig. 4.

As illustrated in Fig. 4, the display device 112 includes an image file acquisition unit 311, a display processing unit 312, and a display unit 313. The display device 112 also includes an authenticity determination unit 321, a reliability determination unit 322, a deviation amount information acquisition unit 323, an image capture time correction unit 324, and an image capture time acquisition unit 325.

The image file acquisition unit 311 performs processing related to acquisition of an image file. The image file acquisition unit 311 has a communication function for communicating with the imaging device 111 via the network 110. For example, the image file acquisition unit 311 may acquire an image file supplied from the imaging device 111 by using the communication function. The image file acquisition unit 311 may supply the acquired image file to the display processing unit 312. The image file acquisition unit 311 may supply the acquired image file to the authenticity determination unit 321. The image file acquisition unit 311 may supply the acquired image file to the reliability determination unit 322. The image file acquisition unit 311 may supply the acquired image file to the image capture time correction unit 324.

The image file acquisition unit 311 may supply the acquired image file to the deviation amount information acquisition unit 323. The image file acquisition unit 311 may supply the acquired image file to the image capture time acquisition unit 325.

The display processing unit 312 performs processing related to display of information. For example, the display processing unit 312 may acquire an image file supplied from the image file acquisition unit 311. The display processing unit 312 may extract information stored in the acquired image file. The display processing unit 312 may supply image information for displaying the extracted information to the display unit 313 for display. For example, the display processing unit 312 may extract the captured image, the local image capture time, and the image capture server time from the image file, and supply image information for displaying them to the display unit 313 for display. The display processing unit 312 may extract other information such as the acquired server time, the local identification information, and the deviation amount information from the image file, and supply image information for displaying the extracted other information to the display unit 313 for display.

The display processing unit 312 may acquire information indicating a result of determining the authenticity supplied from the authenticity determination unit 321. The display processing unit 312 may supply image information for displaying the result of determining the authenticity to the display unit 313 for display. The display processing unit 312 may acquire information indicating a result of determining the reliability supplied from the reliability determination unit 322. The display processing unit 312 may supply image information for displaying the result of determining the reliability to the display unit 313 for display. The display processing unit 312 may acquire a corrected image capture server time supplied from the image capture time correction unit 324 or the image capture time acquisition unit 325. The display processing unit 312 may supply image information for displaying the corrected image capture server time to the display unit 313 for display.

The display unit 313 performs processing related to display of image information. The display unit 313 includes an image display device such as a liquid crystal monitor. This image display device may be any device as long as it can display an image. For example, the display unit 313 may acquire image information supplied from the display processing unit 312. The display unit 313 may use the image display device to display an image corresponding to the acquired image information. For example, the display unit 313 may display the captured image, the image capture local time, and the image capture server time, which are supplied from the display processing unit 312. The display unit 313 may display other information supplied from the display processing unit 312, such as an acquired server time, local identification information, and deviation amount information. The display unit 313 may display the result of determining the authenticity supplied from the display processing unit 312. The display unit 313 may display the result of determining the reliability supplied from the display processing unit 312. The display unit 313 may display the corrected image capture server time supplied from the display processing unit 312.

The authenticity determination unit 321 performs processing related to determination of the authenticity of a captured image. For example, the authenticity determination unit 321 may acquire an image file supplied from the image file acquisition unit 311. The authenticity determination unit 321 may determine the authenticity of the captured image based on the image capture server time stored in the acquired image file. The authenticity determination unit 321 may generate information indicating a result of determining the authenticity and supply the information to the display processing unit 312.

The reliability determination unit 322 performs processing related to determination of the reliability of an image capture server time. For example, the reliability determination unit 322 may acquire an image file supplied from the image file acquisition unit 311. The reliability determination unit 322 may determine the reliability of the image capture server time based on the acquired server time stored in the acquired image file. The reliability determination unit 322 may generate information indicating a result of determining the reliability, and supply the information to the display processing unit 312.

The reliability determination unit 322 performs processing related to determination of the reliability of an image capture server time. For example, the reliability determination unit 322 may acquire an image file supplied from the image file acquisition unit 311. The reliability determination unit 322 may determine the reliability of the image capture server time based on the acquired server time stored in the acquired image file. The reliability determination unit 322 may generate information indicating a result of determining the reliability, and supply the information to the display processing unit 312.

The deviation amount information acquisition unit 323 performs processing related to acquisition of deviation amount information. The deviation amount information acquisition unit 323 has a communication function for communicating with the clock server 113 via the network 110. For example, the deviation amount information acquisition unit 323 may request deviation amount information from the clock server 113. At that case, the deviation amount information acquisition unit 323 may supply the local identification information stored in the image file to the clock server 113. The deviation amount information acquisition unit 323 may supply that image file (the image file in which the local identification information is stored) to the clock server 113. In response to this request, the deviation amount information acquisition unit 323 may acquire deviation amount information supplied from the clock server 113. This deviation amount information corresponds to the request made by the deviation amount information acquisition unit 323. Specifically, this deviation amount information is information indicating the amount of deviation of the local clock per unit time in the device (the imaging device 111 in the case of the example of Fig. 2) indicated by the local identification information supplied by the deviation amount information acquisition unit 323. The deviation amount information acquisition unit 323 may supply the acquired deviation amount information to the image capture time correction unit 324.

The image capture time correction unit 324 performs processing related to correction of an image capture server time. For example, the image capture time correction unit 324 may acquire an image file supplied from the image file acquisition unit 311. If an image capture server time, an acquired server time, and deviation amount information (the amount of deviation of the local clock per unit time in the imaging device 111) are stored in this image file, the image capture time correction unit 324 may correct the image capture server time based on the acquired server time and the deviation amount information. For example, the image capture time correction unit 324 derives an image capture time in the standard time information based on the amount of time between the acquired server time and the image capture server time and the amount of deviation of the local clock per unit time. The image capture time correction unit 324 sets this derived "image capture time in the standard time information" as a corrected image capture server time.

If deviation amount information and the like are not stored in the image file supplied from the image file acquisition unit 311, the image capture time correction unit 324 may acquire deviation amount information supplied from the deviation amount information acquisition unit 323. The image capture time correction unit 324 may correct the image capture server time stored in the image file, based on the acquired server time stored in the image file and the deviation amount information supplied from the deviation amount information acquisition unit 323. The method of the correction is the same as that described above.

In either case, the deviation amount information is not necessarily completely accurate. Therefore, the derived "image capture time in the standard time information" does not necessarily match the actual image capture time in the standard time information. However, it is expected that the image capture time is closer to the actual image capture time in the standard time information than the image capture server time. Therefore, the image capture time correction unit 324 sets this derived "image capture time in the standard time information" as a corrected image capture server time. The image capture time correction unit 324 may supply the corrected image capture server time to the display processing unit 312.

The image capture time acquisition unit 325 performs processing related to acquisition of a corrected image capture server time. The image capture time acquisition unit 325 has a communication function for communicating with the clock server 113 via the network 110. For example, the image capture time acquisition unit 325 may request the corrected image capture server time from the clock server 113. In that case, the image capture time acquisition unit 325 may supply, to the clock server 113, the local identification information, the acquired server time, and the image capture server time, which are stored in the image file. The image capture time acquisition unit 325 may supply the image file (the image file in which the local identification information, the acquired server time, and the image capture server time are stored) to the clock server 113. In response to this request, the image capture time acquisition unit 325 may acquire a corrected image capture server time supplied from the clock server 113. This corrected image capture server time corresponds to the request made by the image capture time acquisition unit 325. In other words, the corrected image capture server time corresponds to the image capture server time supplied by the image capture time acquisition unit 325. This corrected image capture server time may be derived, for example, in the clock server 113 in the same manner as in the image capture time correction unit 324. The image capture time acquisition unit 325 may supply the corrected image capture server time to the display processing unit 312.

### <Clock Server>

The clock server 113 may be configured, for example, by a single information processing device or as a plurality of information processing devices. The clock server 113 may be implemented as cloud computing (i.e., a cloud server) in which a plurality of devices share and cooperate with each other to perform processing via a network.

Fig. 5 is a block diagram illustrating an example of the configuration of the clock server 113 serving as one aspect of an image processing device to which the present technology is applied.

Fig. 5 illustrates main processing units and data flows. The present disclosure is not limited to those illustrated in Fig. 5. In other words, the clock server 113 may include processing units not illustrated as blocks in Fig. 5, and there may be processing and data flows not indicated as arrows or the like in Fig. 5.

As illustrated in Fig. 5, the clock server 113 includes a time management unit 411, a current time supply unit 412, a time acquisition unit 413, and a deviation amount derivation unit 414. The clock server 113 also includes a deviation amount management unit 421, a request acquisition unit 422, a deviation amount information supply unit 423, an image capture time correction unit 424, and an image capture time supply unit 425.

The time management unit 411 manages the standard time information. For example, the time management unit 411 may supply the current time in the standard time information to the current time supply unit 412. The time management unit 411 may supply the current time in the standard time information to the deviation amount derivation unit 414. Such processing (supply of the current time) may be performed based on a request from the imaging device 111.

The current time supply unit 412 performs processing related to supply of the current time. The current time supply unit 412 has a communication function for communicating with the imaging device 111 via the network 110. For example, the current time supply unit 412 may acquire the current time in the standard time information supplied from the time management unit 411. The current time supply unit 412 may supply the current time in the standard time information to the imaging device 111. Such processing (supply of the current time) may be performed based on a request from the imaging device 111.

The time acquisition unit 413 performs processing related to acquisition of information related to time and the like. The time acquisition unit 413 has a communication function for communicating with the imaging device 111 via the network 110. For example, the time acquisition unit 413 may acquire information supplied from the imaging device 111 (e.g., local identification information, the current server time, the previous acquired server time, etc.). The time acquisition unit 413 may acquire this information as a request for the current time in the standard time information. The time acquisition unit 413 may supply the acquired information to the deviation amount derivation unit 414. The time acquisition unit 413 may notify the time management unit 411 and the current time supply unit 412 that the request has been acquired.

The deviation amount derivation unit 414 performs processing related to derivation of the amount of deviation of the local clock per unit time. For example, the deviation amount derivation unit 414 may acquire local identification information, the current server time, the previous acquired server time, and so on, which are supplied from the time acquisition unit 413. The deviation amount derivation unit 414 may acquire the current time in the standard time information supplied from the time management unit 411. The deviation amount derivation unit 414 may derive the amount of deviation of the local clock per unit time by using the acquired information. For example, the deviation amount derivation unit 414 may derive the amount of time between the previous acquired server time to the current server time, derive the amount of deviation between the current server time and the current time in the standard time information, and derive the amount of deviation of the local clock per unit time based on the derived amount of time and amount of deviation. This derived amount of deviation per unit time is an amount of deviation of a local clock per unit time in a device (e.g., the imaging device 111) indicated by the acquired local identification information. The deviation amount derivation unit 414 may supply the derived amount of deviation of the local clock per unit time to the deviation amount management unit 421 together with the acquired local identification information and so on.

The deviation amount management unit 421 performs processing related to management of an amount of deviation of a local clock per unit time. For example, the deviation amount management unit 421 may acquire information (an amount of deviation of a local clock per unit time, local identification information, etc.) supplied from the deviation amount derivation unit 414. The deviation amount management unit 421 may manage the amount of deviation of the local clock per unit time for each device based on the local identification information. The deviation amount management unit 421 may supply an amount of deviation of a local clock per unit time of a specified device (local identification information) to the deviation amount information supply unit 423. This specification of the device may be performed, for example, in response to a request from the display device 112. For example, the deviation amount management unit 421 may acquire a request from the display device 112 supplied from the request acquisition unit 422. This request may include specifying a desired device. For example, this request may include local identification information for specifying the desired device (or an image file storing the local identification information). In response to the request, the deviation amount management unit 421 may supply the amount of deviation of the local clock per unit time in the specified device to the deviation amount information supply unit 423.

The deviation amount management unit 421 may supply the amount of deviation of the local clock per unit time in the specified device (local identification information) to the image capture time correction unit 424. This specification of the device may be performed, for example, in response to a request from the image capture time correction unit 424. For example, the deviation amount management unit 421 may supply the amount of deviation of the local clock per unit time to the image capture time correction unit 424 in response to a request from the image capture time correction unit 424. This request may include specifying a desired device. For example, this request may include local identification information for specifying the desired device (or an image file storing the local identification information).

The request acquisition unit 422 performs processing related to acquisition of a request. The request acquisition unit 422 has a communication function for communicating with the display device 112 via the network 110. For example, the request acquisition unit 422 may acquire a request for deviation amount information supplied from the display device 112. This request may include, for example, local identification information for specifying a desired device (or an image file storing the local identification information). The request acquisition unit 422 may supply the request to the deviation amount management unit 421.

The request acquisition unit 422 may acquire a request for a corrected image capture server time supplied from the display device 112. This request may include, for example, local identification information for specifying a desired device, an acquired server time, and an image capture server time (and an image file storing these pieces of information). The request acquisition unit 422 may supply the request to the image capture time correction unit 424.

The deviation amount information supply unit 423 performs processing related to supply of deviation amount information. The deviation amount information supply unit 423 has a communication function for communicating with the display device 112 via the network 110. For example, the deviation amount information supply unit 423 may acquire the amount of deviation of the local clock per unit time supplied from the deviation amount management unit 421. The deviation amount information supply unit 423 may supply the acquired deviation amount information indicating the amount of deviation of the local clock per unit time to the display device 112.

The image capture time correction unit 424 performs processing related to correction of an image capture server time. For example, the image capture time correction unit 424 may acquire a request for a corrected image capture server time supplied from the request acquisition unit 422. This request may include, for example, local identification information for specifying a desired device, an acquired server time, and an image capture server time (or an image file storing these pieces of information). The image capture time correction unit 424 may request from the deviation amount management unit 421 the amount of deviation of the local clock per unit time of the device indicated by the local identification information. For example, that request may include local identification information (or an image file storing the local identification information). In response to that request, the image capture time correction unit 424 may acquire an amount of deviation of a local clock per unit time of a desired device (i.e., a device indicated by the local identification information) supplied from the deviation amount management unit 421.

The image capture time correction unit 424 may correct the image capture server time by using the amount of deviation of the local clock per unit time and the acquired server time. In other words, the image capture time correction unit 424 may derive a corrected image capture server time. The method of correcting the image capture server time is the same as in the above-described case of the image capture time correction unit 324 of the display device 112. The image capture time correction unit 424 may supply the derived and corrected image capture server time to the image capture time supply unit 425.

The image capture time supply unit 425 performs processing related to supply of a corrected image capture server time. The image capture time supply unit 425 has a communication function for communicating with the display device 112 via the network 110. For example, the image capture time supply unit 425 may acquire a corrected image capture server time supplied from the image capture time correction unit 424. The image capture time supply unit 425 may supply the acquired corrected image capture server time to the display device 112.

### <Setting of Network Functions>

The imaging device 111 may be configured to allow the user to set the operation mode. For example, as illustrated in Fig. 6, the housing of the imaging device 111 may be provided with a shutter button 511 on which the user or the like operates to make an instruction for image capture, a user interface 512 made up of buttons and the like on which the user operates to make an instruction other than image capture, and a monitor 513 that displays images.

For example, the user may operate the user interface 512 to display a menu screen (Fig. 6) on the monitor 513, which is a graphical user interface (GUI) for setting the operation mode and others, to set the operation mode and others. Fig. 6 illustrates an example of display of a menu screen for network functions. For example, on this menu screen (GUI) for the network functions, the user may operate the user interface 512 and others to select "Acquisition of clock server time information", thereby executing processing for acquiring the current time (acquired server time) from the clock server 113. The user may select "Display of current server time", so that the current time (current server time) in the server time information managed in the time management unit 213 may be displayed on the monitor 513. The user may select "Display of acquired server time", so that the acquired server time (previous acquired server time) held by the time management unit 213 may be displayed on the monitor 513. The user may select "Automatic acquisition of clock server time information" and set "ON" or "OFF" to set whether or not to automatically acquire the current time from the clock server 113 (regularly or irregularly). As illustrated in the example of Fig. 6, by setting "Automatic acquisition of clock server time information" to "ON", the imaging device 111 acquires the current time from the clock server 113 without any user instruction (e.g., when a predetermined condition is satisfied).

### <Application of Method 1>

To (each device of) the image processing system 100 configured as above, the various methods (the present technology) described above in <3. Transmission of Image Capture Local Time and Image Capture Server Time> may be applied. For example, Method 1 described above may be applied. Specifically, local time information and server time information may be managed, and an image capture time based on each piece of time information may be stored in a file together with a captured image.

For example, in the imaging device 111 (first image processing device), the time setting unit 211 may set a set local time (first time). The time acquisition unit 212 may acquire an acquired server time (second time) supplied from the clock server 113 or the like (server). The time management unit 213 may manage local time information (first time information) in which the set local time thus set is set as a start time and server time information (second time information) in which the acquired server time thus acquired is set as a start time, using a local clock generated in the imaging device 111. The sensor unit 222 may capture an image of a subject to generate a captured image. The image file generation unit 231 may generate a file storing: the captured image; an image capture local time (first image capture time) indicating a timing of generation of the captured image by using the local time information; and an image capture server time (second image capture time) indicating the timing of generation by using the server time information.

### <Flow of Local Time Setting Processing>

The local time information (first time information) is time information for which the user or the like is allowed to set a set local time (first time). The imaging device 111 manages the local time information, using a local clock. Specifically, for the local time information, the imaging device 111 advances the time using the local clock, with the set local time being set by the user or the like as a start time.

An example of the flow of local time setting processing executed in the imaging device 111 (first information processing device) to set such local time information will be described with reference to a flowchart of Fig. 7.

When the local time setting processing is started, then in step S101, the time setting unit 211 sets a set local time (first time).

In step S102, the time management unit 213 manages local time information (first time information) in which the set local time is set as a start time, using a local clock generated in the imaging device 111.

When the processing of step S102 ends, then the local time setting processing ends.

### <Flow of Server Time Acquisition Processing>

The server time information (second time information) is time information based on acquired server time (second time) acquired from the clock server or the like that manages and provides the standard time information (global clock). The imaging device 111 manages this server time information in such a way that does not allow the user or the like to set that information. The timing for acquiring the acquired server time may be any timing.

The imaging device 111 manages the server time information, using a local clock. Specifically, for the server time information, the imaging device 111 advances the time, with an acquired server time (the current time indicated by the standard time information) acquired from the clock server or the like being set as a start time, using the local clock.

An example of the flow of server time acquisition processing executed in the imaging device 111 (first information processing device) to acquire this acquired server time will be described with reference to a flowchart of Fig. 8.

When the server time acquisition processing is started, then in step S111, the time acquisition unit 212 acquires the current time (second time) in the standard time information supplied from the clock server 113. In other words, the time acquisition unit 212 acquires acquired server time.

In step S112, the time management unit 213 manages server time information (second time information) in which the acquired server time (the current time in the acquired standard time information) is set as a start time, using a local clock generated in the imaging device 111.

When the processing of step S112 ends, then the server time acquisition processing ends.

### <Flow of Imaging Processing>

When the imaging device 111 (first information processing device) captures an image of a subject to generate a captured image, the imaging device 111 indicates the timing of generation of the captured image (image capture time) by using local time information and server time information. In other words, the imaging device 111 generates information indicating the image capture time in the local time information (image capture local time) and information indicating the image capture time in the server time information (image capture server time). The imaging device 111 stores them in an image file together with the captured image. The file is then supplied to the display device 112 (second image processing device) via a communication medium or a storage medium. An example of such processing to be performed, that is, the flow of imaging processing executed in the imaging device 111 will be described with reference to a flowchart of Fig. 9.

When the imaging processing is started, then in step S121, the sensor unit 222 (the image sensor 241 and the 3D information sensor 242) captures an image of a subject and acquires a RAW image and 3D information on the same optical axis.

In step S122, the RAW processing unit 223 performs correction processing such as white balance adjustment on the RAW image. The YUV processing unit 224 converts the corrected RAW image into a YUV image. The YUV processing unit 224 encodes the YUV image to generate a JPEG image. The reduced image generation unit 225 reduces the JPEG image (primal image) to generate a reduced image. Any method of generating this reduced image may be used. The reduced image may have any size. For example, the reduced image may be a so-called thumbnail or a so-called screennail. The image information addition unit 226 generates image information related to the primal image and the reduced image as metadata. The 3D information processing unit 227 performs predetermined processing on the 3D information, such as reducing the resolution of the 3D information.

In step S123, the hash processing unit 228 generates a hash using the primal image, the 3D information, the reduced image, and the image information.

In step S124, the signature generation unit 230 encrypts the generated hash using a device private key for the imaging device 111, thereby generating a signature for the primal image and the 3D information.

In step S125, the image file generation unit 231 generates an image file to store the primal image (captured image), the reduced image, the image information, and the signature. The image file generation unit 231 stores the image capture local time (first image capture time) and the image capture server time (second image capture time) in the image file. Specifically, the image file generation unit 231 generates an image file storing: the captured image; the first image capture time (image capture local time) indicating the timing of generation of the captured image by using the local time information (first time information); and the second image capture time (image capture server time) indicating that timing of generation by using the server time information (second time information). The time management unit 213 generates the image capture local time and the image capture server time.

In step S126, the image file recording unit 232 records the image file.

In step S127, the image file supply unit 233 supplies the image file to the display device 112.

When step S127 ends, then the imaging processing ends.

### <Flow of Image Display Processing>

The display device 112 (second information processing device) may acquire the image file and display the captured image, the local image capture time, and the image capture server time, which are stored in the image file.

For example, in the display device 112 (second image processing device), the image file acquisition unit 311 may acquire a file storing: a captured image generated by the imaging device 111 (first image processing device); an image capture local time (first image capture time) indicating the timing of generation of the captured image by using local time information (first time information); and an image capture server time (second image capture time) indicating that timing of generation by using server time information (second time information). The display processing unit 312 may display the captured image, the first image capture time, and the second image capture time on the display unit 313.

The local time information (first time information) is time information in which a set local time (first time) set in the imaging device 111 (first image processing device) is set as a start time and which is managed using a local clock generated in the imaging device 111. The server time information (second time information) is time information in which an acquired server time (second time) supplied to the imaging device 111 from the clock server 113 or the like (server) is set as a start time and which is managed using a local clock.

An example of such processing to be performed, that is, the flow of image display processing executed in the display device 112 will be described with reference to a flowchart of Fig. 10.

When the image display processing is started, then in step S131, the image file acquisition unit 311 acquires an image file. This image file stores: a captured image generated by the imaging device (first image processing device); an image capture local time (first image capture time) indicating the timing of generation of the captured image by using local time information (first time information); and an image capture server time (second image capture time) indicating that timing of generation by using server time information (second time information).

In step S132, the display processing unit 312 extracts the captured image, the image capture local time, and the image capture server time from the acquired image file, and displays them on the display unit 313.

When the processing of step S132 ends, the image display processing ends.

For example, based on the image capture server time (second image capture time) thus displayed, the user of the display device 112 can determine the authenticity of the displayed captured image (whether or not it has been falsified or the possibility of it being falsified, etc.). This allows the user to more accurately determine the authenticity of the captured image.

Based on the captured local time (first captured time) thus displayed, the user of the display device 112 can also sort captured images generated by a plurality of imaging devices 111 whose pieces of local time information (first time information) have been matched with each other. As described above, the pieces of local time information can be easily synchronized among the imaging devices 111. Therefore, by using the image capture local times, the user can more easily and more accurately sort the captured images generated by the plurality of imaging devices 111 based on the image capture times.

By executing each processing as described above, the imaging device 111 can provide an image file including both the image capture local time and the image capture server time. The display device 112 can display both the image capture local time and the image capture server time, which are stored in the image file. In other words, both the imaging device 111 and the display device 112 can suppress a reduction in the accuracy of the image capture time added to the captured image, and suppress a reduction in the accuracy of the synchronization of the image capture times among the imaging devices. Thus, both the imaging device 111 and the display device 112 can suppress a reduction in the usability (ease of use) of the captured image.

### <Flow of Image Display Processing>

The display device 112 may determine the authenticity of a captured image based on the local image capture time and the image capturing server time.

For example, in the display device 112 (second information processing device), the authenticity determination unit 321 may determine the authenticity of a captured image based on the image capture local time (first image capture time) and the image capture server time (second image capture time). Accordingly, the display processing unit 312 may display the result of determining the authenticity on the display unit 313.

An example of the flow of image display processing executed in the display device 112 in that case will be described with reference to a flowchart of Fig. 11.

In this case, when the image display processing is started, then in step S141, the image file acquisition unit 311 acquires an image file. This image file stores: a captured image generated by the imaging device (first image processing device); an image capture local time (first image capture time) indicating the timing of generation of the captured image by using local time information (first time information); and an image capture server time (second image capture time) indicating that timing of generation by using server time information (second time information).

In step S142, the authenticity determination unit 321 determines the authenticity of the captured image based on the image capture local time and the image capture server time, which are stored in the image file, and determines whether or not the captured image has been falsified.

The determination of the authenticity may be performed by any method. If some kind of inconsistency occurs between the image capture server time and the image capture local time, for example, if the image capture server time and the image capture local time are extremely different, or if the sorting order of a plurality of captured images based on their image capture server times is different from the sorting order of the captured images based on their image capture local times, the authenticity determination unit 321 may determine that the captured image has been falsified.

If it is determined that the captured image has not been falsified, the processing proceeds to step S143. In step S143, the display processing unit 312 extracts the captured image, the image capture local time, and the image capture server time from the acquired image file, and displays them on the display unit 313.

When the processing of step S143 ends, then the image display processing ends. Moreover, if it is determined in step S142 that the captured image has been falsified, the processing of step S143 is skipped, and then the image display processing ends. In this case, an error message may be displayed.

By executing each processing in this way, the display device 112 can more accurately determine the authenticity of the captured image. In other words, the user of the display device 112 can confirm a more accurate result of determining the authenticity of the captured image.

The imaging device 111 may generate an electronic signature for the image capture local time and the image capture server time. In this case, the time management unit 213 may generate the image capture local time and the image capture server time. In step S123 of Fig. 9, the hash processing unit 228 may further generate a hash using the image capture local time and the image capture server time. In step S124 of Fig. 9, the signature generation unit 230 may encrypt this hash (i.e., the hash generated using the captured image, the image capture local time, the image capture server time, etc.) to generate an electronic signature for the captured image, the image capture local time (first image capture time), and the image capture server time (second image capture time).

With such a configuration, the imaging device 111 can prevent falsification of the image capture local time and the image capture server time.

### <Application of Method 1-1>

For example, Method 1-1 described above may be applied. In other words, the time when a server time was acquired (acquired server time) may be stored in the file. For example, in the imaging device 111 (first image processing device), the image file generation unit 231 may store the acquired server time (second time) indicating the timing of acquisition in the image file.

### <Flow of Imaging Processing>

An example of the flow of imaging processing executed in the imaging device 111 (first image processing device) in that case will be described with reference to a flowchart of Fig. 12.

When the imaging processing is started, then the processing of steps S151 to S154 is performed in the same manner as the processing of steps S121 to S124 of Fig. 9.

In step S155, the image file generation unit 231 generates an image file to store the primal image (captured image), the reduced image, the image information, and the signature. The image file generation unit 231 stores the image capture local time (first image capture time), the image capture server time (second image capture time), and the acquired server time in the image file. Specifically, the image file generation unit 231 generates an image file storing: the captured image; the image capture local time (first image capture time) indicating the timing of generation of the captured image by using the local time information (first time information); the image capture server time (second image capture time) indicating that timing of generation by using the server time information (second time information); and the acquired server time (second time) indicating the timing of acquisition. The time management unit 213 holds the acquired server time.

Processing of steps S156 and S157 is executed in the same manner as the processing of steps S126 and S127 of Fig. 9.

When step S157 ends, then the imaging processing ends.

### <Flow of Image Display Processing>

In this case, the image display processing executed in the display device 112 (second information processing device) is executed in the same manner as in the example of Fig. 10.

The display device 112 may perform processing using the acquired server time stored in the file. This acquired server time may be used in any way. For example, the display device 112 may use the acquired server time to determine the reliability of the image capture server time. The display device 112 may display a result of determining the reliability.

For example, the reliability determination unit 322 in the display device 112 (second image processing device) may determine the reliability of the image capture server time (second image capture time). Accordingly, the display processing unit 312 may display the determined reliability on the display unit 313.

An example of the flow of image display processing in this case will be described with reference to a flowchart of Fig. 13.

When the image display processing is started, then in step S161, the image file acquisition unit 311 acquires an image file. This image file stores: a captured image generated by the imaging device (first image processing device); an image capture local time (first image capture time) indicating the timing of generation of the captured image by using local time information (first time information); an image capture server time (second image capture time) indicating that timing of generation by using server time information (second time information); and an acquired server time (second time) indicating a timing of acquisition.

In step S162, the reliability determination unit 322 determines the reliability of the image capture server time (second image capture time) by using the acquired server time (second time). The reliability of the image capture server time may be determined by any method. For example, the reliability determination unit 322 may determine the reliability of the image capture server time based on the length of time between the acquired server time and the image capture server time. For example, the reliability determination unit 322 may determine that the longer the amount of time between the acquired server time and the image capture server time, the lower the reliability of the image capture server time.

In step S163, the display processing unit 312 extracts the captured image, the image capture local time, and the image capture server time from the acquired image file, and displays them on the display unit 313. The display processing unit 312 displays the result of determining the reliability on the display unit 313.

When the processing of step S163 ends, then the image display processing ends.

By executing each processing as described above, the display device 112 can present the reliability of the image capture server time. In other words, the user of the display device 112 can more easily confirm the reliability of the image capture server time.

The image capture server time may be corrected based on the acquired server time. For example, the acquired server time (second time) may be stored in the image file supplied to the display device 112 (second information processing device). Accordingly, in the display device 112, the display processing unit 312 may display on the display unit 313 the image capture server time (second image capture time) corrected based on the amount of deviation of the local clock per unit time and the acquired server time.

The amount of deviation of the local clock per unit time may be managed by any device. For example, the imaging device 111 may manage the amount of deviation per unit time. The clock server 113 or the like may manage the amount of deviation per unit time.

The clock server 113 may manage the deviation of the local clock per unit time for each device. For example, the deviation amount management unit 421 in the clock server 113 (information processing device) may manage the deviation of the local clock generated in another device (e.g., the imaging device 111) per unit time for each other device.

With such a configuration, the clock server 113 can more easily supply the amount of deviation of the local clock per unit time in a requested (specified) device.

The imaging device 111 may manage the amount of deviation of its own local clock per unit time. With such a configuration, the imaging device 111 can more easily supply the amount of deviation of its own local clock per unit time.

The amount of deviation of the local clock per unit time may be derived in any device. For example, the imaging device 111 may derive the amount of deviation per unit time. The clock server 113 may derive the amount of deviation per unit time.

The image capture server time may be corrected in any device. For example, the display device 112 may correct the image capture server time based on the acquired server time and the amount of deviation of the local clock per unit time. The clock server 113 may correct the image capture server time based on the acquired server time and the amount of deviation of the local clock per unit time.

The imaging device 111 may generate an electronic signature for this acquired server time. For example, the signature generation unit 230 may generate an electronic signature for the captured image, the image capture local time (first image capture time), the image capture server time (second image capture time), and the acquired server time (second time). Accordingly, the image file generation unit 231 may store the generated electronic signature in the image file. With such a configuration, the imaging device 111 can prevent falsification of the acquired server time.

### <Application of Method 1-1-1>

For example, Method 1-1-1 described above may be applied. In other words, local identification information for identifying the imaging device 111 may be stored in the file. For example, in the imaging device 111 (first image processing device), the image file generation unit 231 may store local identification information (identification information) for identifying the device in the file.

### <Flow of Imaging Processing>

An example of the flow of imaging processing executed in the imaging device 111 (first image processing device) in that case will be described with reference to a flowchart of Fig. 14.

When the imaging processing is started, then the processing of steps S171 to S174 is performed in the same manner as the processing of steps S121 to S124 of Fig. 9.

In step S175, the image file generation unit 231 generates an image file to store the primal image (captured image), the reduced image, the image information, and the signature. The image file generation unit 231 stores the image capture local time (first image capture time), the image capture server time (second image capture time), the acquired server time, and the local identification information in the image file. Specifically, the image file generation unit 231 generates an image file storing: the captured image; the image capture local time (first image capture time) indicating the timing of generation of the captured image by using the local time information (first time information); the image capture server time (second image capture time) indicating that timing of generation by using the server time information (second time information); the acquired server time (second time) indicating the timing of acquisition; and the local identification information for identifying the device.

Processing of steps S176 and S177 is executed in the same manner as the processing of steps S126 and S127 of Fig. 9.

When step S177 ends, then the imaging processing ends.

By local identification information being stored in the file (added to a captured image) in this way, a device that processes the file (e.g., the display device 112) can more easily identify, based on the local identification information, the device that has generated the captured image stored in the file.

### <Flow of Image Display Processing>

In this case, the display device 112 (second information processing device) may perform processing using the local identification information. For example, the display device 112 may use the local identification information to acquire the deviation of the local clock per unit time in the imaging device 111 from the clock server 113. Accordingly, the display device 112 may use the acquired amount of deviation of the local clock per unit time to correct the image capture server time and display the corrected image capture server time.

When the clock server 113 manages the amount of deviation of the local clock per unit time and the display device 112 corrects the image capture server time, the display device 112 may request, using the local identification information (or the image file in which the local identification information is stored), the amount of deviation of the local clock per unit time in the imaging device 111. The clock server 113 may supply, based on the local identification information, the requested amount of deviation of the local clock per unit time in the imaging device 111 to the display device. The display device 112 may correct the image capture server time based on the amount of deviation of the local clock per unit time in the imaging device 111 and the acquired server time, and display the corrected image capture server time and the image capture local time.

For example, in the clock server 113 (information processing device), the deviation amount information supply unit 423 may supply deviation amount information indicating an amount of deviation of a local clock per unit time of a specified other device (imaging device 111) to the display device 112 that displays a captured image generated in the other device.

For example, in the display device 112 (second image processing device), the deviation amount information acquisition unit 323 may acquire deviation amount information indicating the amount of deviation of the local clock per unit time from the clock server 113 or the like (server). Accordingly, the image capture time correction unit 324 may correct the image capture server time (second image capture time) based on the acquired deviation amount information and the acquired server time (second time).

An example of the flow of image display processing in this case will be described with reference to a flowchart of Fig. 15.

When the image display processing is started, then in step S181, the image file acquisition unit 311 acquires an image file. This image file stores: a captured image generated by the imaging device (first image processing device); an image capture local time (first image capture time) indicating the timing of generation of the captured image by using local time information (first time information); an image capture server time (second image capture time) indicating that timing of generation by using server time information (second time information); an acquired server time (second time) indicating a timing of acquisition; and local identification information for identifying the device.

In step S182, the deviation amount information acquisition unit 323 supplies local time information indicating the imaging device 111 (or an image file storing the local identification information) to the clock server 113, thereby requesting deviation amount information indicating the amount of deviation of the local clock generated in the imaging device 111 per unit time.

In step S183, the deviation amount information acquisition unit 323 acquires the deviation amount information supplied from the clock server 113 in response to the request.

In step S184, the image capture time correction unit 324 corrects the image capture server time by using the acquired server time and the acquired deviation amount information.

In step S185, the display processing unit 312 extracts the captured image and the image capture local time from the image file, and displays the corrected image capture server time on the display unit 313 together with the extracted captured image and image capture local time.

When the processing of step S185 ends, then the image display processing ends.

By executing each processing as described above, the display device 112 can display the image capture time more accurately.

### <Flow of Deviation Amount Information Supply Processing>

An example of the flow of deviation amount information supply processing executed in the clock server 113 (information processing device) to supply deviation amount information will be described with reference to a flowchart of Fig. 16.

When the deviation amount information supply processing is started, then in step S191, the request acquisition unit 422 of the clock server 113 receives a request (a request for deviation amount information) from the display device 112. This request includes local identification information indicating a desired device (e.g., the imaging device 111) (or an image file storing the local identification information).

In step S192, the deviation amount management unit 421 identifies the amount of deviation of the local clock per unit time in the specified device (e.g., the imaging device 111) in accordance with the request (local identification information). The deviation amount information supply unit 423 generates deviation amount information indicating the identified amount of deviation of the local clock per unit time, and supplies the deviation amount information to the display device 112 which has made the request.

When the processing of step S192 ends, then the deviation amount information supply processing ends.

By executing each processing as described above, the clock server 113 can more easily supply the deviation of the local clock per unit time in the requested device (e.g., the imaging device 111) to the display device 112.

### <Flow of Image Display Processing>

The clock server 113 may manage the amount of deviation of the local clock per unit time, and the clock server 113 may correct the image capture server time by itself. In this case, the display device 112 may request the clock server 113 to correct the image capture server time by using its own local identification information, the acquired server time, and the image capture server time (or the image file in which they are stored). The clock server 113 may identify, based on the local identification information, the amount of deviation of the local clock per unit time in the requested imaging device 111. Accordingly, the clock server 113 may correct the image capture server time based on the amount of deviation per unit time and the acquired server time. Accordingly, the clock server 113 may supply the corrected image capture server time to the display device 112. The display device 112 may acquire and display the corrected image capture server time.

For example, in the clock server 113 (information processing device), the image capture time correction unit 424 may correct the image capture time of a captured image generated in the specified imaging device 111 (another device) by using the amount of deviation of the local clock per unit time in the imaging device 111. The image capture time supply unit 425 may supply the corrected image capture time to the display device 112 that displays the captured image.

For example, in the display device 112 (second image processing device), the image capture time acquisition unit 325 may acquire the corrected image capture server time (second image capture time) from the clock server 113 or the like (server).

An example of the flow of image display processing in this case will be described with reference to a flowchart of Fig. 17.

When the image display processing is started, then in step S201, the image file acquisition unit 311 acquires an image file. This image file stores: a captured image generated by the imaging device (first image processing device); an image capture local time (first image capture time) indicating the timing of generation of the captured image by using local time information (first time information); an image capture server time (second image capture time) indicating that timing of generation by using server time information (second time information); an acquired server time (second time) indicating a timing of acquisition; and local identification information for identifying the device.

In step S202, the image capture time acquisition unit 325 supplies the local time information indicating the imaging device 111, the acquired server time, and the image capture server time (or an image file storing them) to the clock server 113, thereby requesting correction of the image capture server time.

In step S203, in response to this request, the image capture time acquisition unit 325 acquires a corrected image capture server time supplied from the clock server 113.

In step S204, the display processing unit 312 extracts the captured image and the image capture local time from the image file, and displays the corrected image capture server time on the display unit 313 together with the extracted captured image and image capture local time.

When the processing of step S204 ends, then the image display processing ends.

By executing each processing as described above, the display device 112 can display the image capture time more accurately.

### <Flow of Corrected Image Capture Server Time Supply Processing>

An example of the flow of corrected image capture server time supply processing executed in the clock server 113 (information processing device) to supply a corrected image capture server time will be described with reference to the flowchart of Fig. 18.

When the corrected image capture server time supply processing is started, then in step S211, the request acquisition unit 422 of the clock server 113 receives a request (a request for a corrected image capture server time) from the display device 112. This request includes local time information indicating a desired device (e.g., the imaging device 111), the acquired server time, and the image capture server time (or an image file storing them).

In step S212, the deviation amount management unit 421 identifies the amount of deviation of the local clock per unit time in the specified device (e.g., the imaging device 111) in accordance with the request (local identification information). The image capture time correction unit 424 corrects the image capture server time by using the identified amount of deviation of the local clock per unit time and the acquired server time.

In step S213, the image capture time supply unit 425 supplies the corrected image capture server time to the display device 112 which has made the request.

When the processing of step S213 ends, then the corrected image capture server time supply processing ends.

By executing each processing as described above, the clock server 113 can correct the image capture server time more accurately. Thus, the clock server 113 can provide a more accurate image capture server time.

The imaging device 111 may generate an electronic signature for this local identification information. For example, in the imaging device 111 (first information processing device), the signature generation unit 230 may generate an electronic signature for the captured image, the image capture local time (first image capture time), the image capture server time (second image capture time), the acquired server time (second time), and the local identification information. Accordingly, the image file generation unit 231 may store the generated electronic signature in the image file. With such a configuration, the imaging device 111 can prevent falsification of the local identification information.

### <Application of Method 1-1-2>

For example, Method 1-1-2 described above may be applied. In other words, deviation amount information may be stored in the file. For example, in the imaging device 111 (first image processing device), the image file generation unit 231 may store deviation amount information indicating an amount of deviation of a local clock per unit time in the file.

### <Flow of Imaging Processing>

An example of the flow of imaging processing executed in the imaging device 111 (first image processing device) in that case will be described with reference to a flowchart of Fig. 19.

When the imaging processing is started, then the processing of steps S221 to S224 is performed in the same manner as the processing of steps S121 to S124 of Fig. 9.

In step S225, the image file generation unit 231 generates an image file to store the primal image (captured image), the reduced image, the image information, and the signature. The image file generation unit 231 stores the image capture local time (first image capture time), the image capture server time (second image capture time), the acquired server time, and the deviation amount information in the image file. Specifically, the image file generation unit 231 generates an image file storing: the captured image; the image capture local time (first image capture time) indicating the timing of generation of the captured image by using the local time information (first time information); the image capture server time (second image capture time) indicating that timing of generation by using the server time information (second time information); the acquired server time (second time) indicating the timing of acquisition; and the deviation amount information.

Processing of steps S226 and S227 is executed in the same manner as the processing of steps S126 and S127 of Fig. 9.

When step S227 ends, then the imaging processing ends.

By the deviation amount information being stored in the file (added to a captured image) in this way, a device that processes the file (e.g., the display device 112) can more easily acquire the amount of deviation of the local clock per unit time.

### <Flow of Server Time Acquisition Processing>

In this case, the amount of deviation of the local clock per unit time may be derived by any device. For example, the imaging device 111 may derive the amount of deviation of its own local clock per unit time. In that case, the imaging device 111 may derive the amount of deviation of the local clock per unit time from the current time in the server time information (also referred to as the current server time), the previous acquired server time, and the current acquired server time. Specifically, the imaging device 111 derives the amount of time between the previous acquired server time and the current server time (an amount of time based on the server time information), derives the amount of deviation between the current server time and the current acquired server time (the amount of discrepancy of the current time between the standard time information and the server time information), and derives, based on the derived amounts, the amount of deviation of the local clock per unit time. The imaging device 111 may acquire the amount of deviation of its own local clock per unit time from the clock server 113 or the like.

An example of the flow of server time acquisition processing executed in the imaging device 111 (first image processing device) to acquire the current time (acquired server time) in the standard time information will be described with reference to a flowchart of Fig. 20. It is assumed that the imaging device 111 calculates an amount of deviation of its own local clock per unit time.

When the server time acquisition processing is started, then in step S231, the time acquisition unit 212 acquires the current time supplied from the clock server.

In step S232, the time management unit 213 manages server time information in which the acquired current time is set as a start time, using the local clock.

In step S233, the time management unit 213 derives the amount of deviation per unit time by using the current server time, the previous acquired server time, and the current acquired server time.

When the processing of step S233 ends, then the server time acquisition processing ends.

By executing each processing in this way, the imaging device 111 can more easily calculate the amount of deviation of its own local clock per unit time.

### <Flow of Image Display Processing>

The display device 112 may correct an image capture server time based on deviation amount information and an acquired server time, which are stored in an image file, and display the corrected image capture server time, as described above. For example, the image file may store deviation amount information indicating an amount of deviation of a local clock per unit time and an acquired server time (second time). In the display device 112 (second image processing device), the image capture time correction unit 324 may correct the image capture server time (second image capture time) based on the deviation amount information and the acquired server time. An example of the flow of image display processing in that case will be described with reference to a flowchart of Fig. 21.

When the image display processing is started, then in step S241, the image file acquisition unit 311 acquires an image file. This image file stores: a captured image generated by the imaging device 111 (first image processing device); an image capture local time (first image capture time) indicating the timing of generation of the captured image by using local time information (first time information); an image capture server time (second image capture time) indicating that timing of generation by using server time information (second time information); an acquired server time (second time) indicating a timing of acquisition; and deviation amount information.

In step S242, the image capture time correction unit 324 corrects the image capture server time by using the deviation amount information and the acquired server time.

In step S243, the display processing unit 312 extracts the captured image and the image capture local time from the image file, and displays the corrected image capture server time on the display unit 313 together with the extracted captured image and image capture local time.

When the processing of step S243 ends, then the image display processing ends.

By executing each processing as described above, the display device 112 can more easily correct the image capture server time. In addition, the display device 112 can display the image capture time more accurately.

The imaging device 111 may generate an electronic signature for this deviation amount information. For example, in the imaging device 111 (first information processing device), the signature generation unit 230 may generate an electronic signature for the captured image, the image capture local time (first image capture time), the image capture server time (second image capture time), the acquired server time (second time), and the deviation amount information. Accordingly, the image file generation unit 231 may store the generated electronic signature in the image file. With such a configuration, the imaging device 111 can prevent falsification of the deviation amount information.

### <Application of Method 1-1-3>

For example, Method 1-1-3 described above may be applied. In other words, when acquiring the current time (current acquired server time) from a server (such as the clock server 113), local identification information, the current server time, and the previous acquired server time may be provided. For example, in the imaging device 111 (first image processing device), when the time acquisition unit 212 acquires the current acquired server time (second time), the time acquisition unit 212 may supply, to a server (such as the clock server 113), local identification information for identifying the device (identification information), the current server time (the current time indicated by the server time information (second time information)), and the previous acquired server time (the second time indicating the timing of the previous acquisition).

### <Flow of Server Time Acquisition Processing>

An example of the flow of server time acquisition processing in this case will be described with reference to a flowchart of Fig. 22. It is assumed that the imaging device 111 calculates an amount of deviation of its own local clock per unit time.

When the server time acquisition processing is started, then in step S251, the time acquisition unit 212 supplies the local identification information, the current server time, and the previous acquired server time to the clock server 113, thereby requesting the current time.

In step S252, in response to this request, the time acquisition unit 212 acquires the current time in the standard time information supplied from the clock server 113.

In step S253, the time management unit 213 manages server time information in which the acquired current time is set as a start time, using the local clock.

When the processing of step S253 ends, then the server time acquisition processing ends.

By executing each processing in this way, the imaging device 111 can more easily provide the local identification information, the current server time, and the previous acquired server time to the clock server 113 or the like.

### <Flow of Server Time Supply Processing>

The clock server 113 may use the current server time and the previous acquired server time, which are supplied from the imaging device 111, and the current time in the standard time information (i.e., the current acquired server time) to derive the amount of deviation of the local clock per unit time in the imaging device 111. Accordingly, the clock server 113 may manage a derived amount of deviation per unit time for each device (linked to local identification information).

For example, when the time acquisition unit 413 in the clock server 113 (information processing device) supplies the acquired server time (first current time) to be currently supplied to the imaging device 111 (another device), the time acquisition unit 413 may acquire local identification information for identifying the imaging device 111, the acquired server time previously supplied to the imaging device 111 (second current time previously supplied), and the current server time (third current time) indicated by the server time information managed by the imaging device 111 using the local clock with the second current time previously supplied being set as the start time. The deviation amount derivation unit 414 may derive the amount of deviation per unit time by using the first current time as well as the acquired second and third current times. The deviation amount management unit 421 may use the acquired identification information to manage the derived amount of deviation per unit time for each of the other devices.

An example of the flow of server time supply processing executed in the clock server 113 when such processing is executed will be described with reference to a flowchart of Fig. 23.

When the server time supply processing is started, then in step S261, the time acquisition unit 413 acquires the local identification information, the current server time, and the previous acquired server time, which are supplied from the imaging device 111, as a request for the current time.

In step S262, in response to this request, the current time supply unit 412 supplies the current time in the standard time information to the imaging device 111.

In step S263, the deviation amount derivation unit 414 derives the amount of deviation of the local clock per unit time in the imaging device 111 by using the current server time, the previous acquired server time, and the current time.

In step S264, the deviation amount management unit 421 manages a derived amount of deviation of the local clock per unit time in the imaging device 111 for each device.

When the processing of step S264 ends, then the server time supply processing ends.

By executing each processing in this way, the clock server 113 can more easily derive the amount of deviation of the local clock per unit time. The clock server 113 can also more easily manage the amount of deviation of the local clock per unit time for each device.

### <Application of Method 1-2>

For example, Method 1-2 described above may be applied. In other words, if the imaging device 111 cannot manage any time information, time information may no longer be stored. For example, in the first image processing device (imaging device), if the time management unit 213 cannot manage the server time information (second time information), the image capture server time (second image capture time) may no longer be stored the image file.

### <Flow of Imaging Processing>

An example of the flow of imaging processing executed in the imaging device 111 (first image processing device) in that case will be described with reference to a flowchart of Fig. 24.

When the imaging processing is started, then the processing of steps S271 to S274 is performed in the same manner as the processing of steps S121 to S124 of Fig. 9.

In step S275, the image file generation unit 231 generates an image file and stores the primal image (captured image), the reduced image, the image information, and the signature.

In step S276, the time management unit 213 determines whether or not the time information is being managed correctly. If it is determined that the time information is being managed correctly, the processing proceeds to step S277.

In step S277, the image file generation unit 231 stores the image capture local time (first image capture time) and the image capture server time (second image capture time) in the image file. When the processing of step S277 ends, then the processing proceeds to step S279. If it is determined in step S276 that the image capture server time is not being managed correctly, the processing proceeds to step S278. In step S278, the image file generation unit 231 no longer stores the image capture server time (second image capture time) while storing the image capture local time (first image capture time) in the image file. When the processing of step S278 ends, then the processing proceeds to step S279.

Processing of steps S279 and S280 is executed in the same manner as the processing of steps S126 and S127 of Fig. 9.

When step S280 ends, then the imaging processing ends.

With such a configuration, the imaging device 111 can prevent information with low reliability or accuracy from being stored in the file. In other words, the imaging device 111 can suppress a reduction in the accuracy or reliability of the image file (i.e., the information in the image file).

### <Application of Method 1-3>

For example, Method 1-3 described above may be applied. In other words, the imaging device 111 may acquire server time information at startup, operation stop, or network connection. The imaging device may acquire the current time (acquired server time) from the clock server or the like at any timing. For example, it may be acquired when the imaging device starts up, stops operation (shuts down), or connects to a network. For example, in the first image processing device (imaging device), the time management unit 213 may acquire the acquired server time (second time) when the imaging device 111 starts up, stops operation, or connects to a network.

The imaging device 111 may periodically acquire the current time (acquired server time) from the clock server 113 or the like during a period when the imaging device 111 can connect to the network. The imaging device 111 may also acquire the current time (acquired server time) from the clock server 113 or the like at a timing based on an instruction from the user or the like.

### <Application of Method 1-4>

For example, Method 1-4 described above may be applied. In other words, the imaging device 111 may acquire server time information through encrypted communication. For example, in the clock server 113 (information processing device), the current time supply unit 412 may supply the current time (acquired server time) to another device (imaging device 111) through encrypted communication.

In the imaging device 111 (first image processing device), the time acquisition unit 212 may acquire and decrypt the acquired server time (second time) supplied through encrypted communication.

With such a configuration, it is possible to prevent falsification of the acquired server time (the current time in the standard time information) supplied from the clock server 113 to the imaging device 111.

### <Application of Method 1-5>

For example, Method 1-5 described above may be applied. In other words, the imaging device 111 may overwrite the local time information with the server time information. For example, in the imaging device 111 (first image processing device), the time setting unit 211 may set a set local time (first time) by using the server time information (second time information).

### <Application of Method 1-5-1>

Method 1-5-1 described above may be applied. In other words, a setting may be provided for overwriting the local time information with the server time information. For example, the imaging device 111 may have, as operation modes, a mode in which the local time information is overwritten with the server time information and a mode in which the local time information is not overwritten, to allow the user or the like to select either operation mode. For example, in the imaging device 111 (first image processing device), the time setting unit 211 may select, based on a user instruction, whether or not to use the server time information (second time information) to set a set local time (first time).

### <Flow of Operation Mode Setting Processing>

An example of the flow of operation mode setting processing executed to set the operation mode in the imaging device 111 (first image processing device) in that case will be described with reference to a flowchart of Fig. 25.

When the operation mode setting processing is started, then in step S291, the control unit 201 of the imaging device 111 determines whether or not to set the operation mode to the overwrite mode. If it is determined that the overwrite mode is to be set, the processing proceeds to step S292.

In step S292, the control unit 201 controls the time management unit 213 to set the operation mode to the overwrite mode in which a set local time (first time) is set using server time information (second time information). When the processing of step S292 ends, then the operation mode setting processing ends.

If it is determined in step S291 that the overwrite mode is not to be set (an overwrite inhibit mode is to be set), then the processing proceeds to step S293.

In step S293, the control unit 201 controls the time management unit 213 to set the operation mode to an overwrite inhibit mode, which inhibits setting a set local time (first time) using server time information (second time information). When the processing of step S293 ends, then the operation mode setting processing ends.

With such a configuration, the user and the like can more easily overwrite the local time information with the server time information.

### <Combination>

Each of the methods described above in <3. Transmission of Image Capture Local Time and Image Capture Server Time> may be applied to (each device of) the image processing system 100 in combination with any other method as long as no contradiction occurs. Three or more methods may be applied in combination. For example, any two or more of Methods 1-1 to 1-5 may be applied in combination. Possible ways of combination include not only those indicated in the table of Fig. 1 as "Method" but also all the elements described above in <3. Transmission of Image Capture Local Time and Image Capture Server Time>. Each of the methods described above may be applied in combination with other methods other than those described above.

### <5. Supplements>

### <Other>

Each example (each method) of the present technology described above may be applied in combination with other examples (other methods) as appropriate, unless a contradiction occurs. Further, each example of the present technology described above may be applied in combination with other technologies other than those described above.

### <Computer>

The series of processing can be executed by hardware or software. When the series of processing is executed by software, a program that constitutes the software is installed on a computer. In this case, the computer includes, for example, a computer built in dedicated hardware and a general-purpose personal computer on which various programs are installed to enable various functions.

Fig. 26 is a block diagram illustrating a configuration example of hardware of a computer that executes the series of processing described above according to a program.

In a computer 900 illustrated in Fig. 26, a central processing unit (CPU) 901, a read only memory (ROM) 902, and a random access memory (RAM) 903 are connected to one another via a bus 904.

An input/output interface 910 is also connected to the bus 904. An input unit 911, an output unit 912, a storage unit 913, a communication unit 914, and a drive 915 are connected to the input/output interface 910.

The input unit 911 is configured with, for example, a keyboard, a mouse, a microphone, a touch panel, or an input terminal. The output unit 912 is configured with, for example, a display, a speaker, or an output terminal. The storage unit 913 is configured with, for example, a hard disk, a RAM disk, or nonvolatile memory. The communication unit 914 is configured with, for example, a network interface. The drive 915 drives a removable medium 921 such as a magnetic disk, an optical disc, a magneto-optical disc, or a semiconductor memory.

In the computer configured thus, the CPU 901 loads a program stored in the storage unit 913 into the RAM 903 via the input/output interface 910 and the bus 904 and executes the program, so that the series of processing is performed. Data and the like necessary for the CPU 901 to execute various kinds of processing is also stored as appropriate in the RAM 903.

The program executed by the computer can be recorded and applied in, for example, the removable medium 921 as a package medium or the like. In this case, the program can be installed in the storage unit 913 via the input/output interface 910 by loading the removable medium 921 into the drive 915.

This program can also be provided via wired or wireless transfer media such as a local area network, the Internet, and digital satellite broadcasting. In such a case, the program can be received by the communication unit 914 and installed in the storage unit 913.

In addition, this program can be installed in advance in the ROM 902 or the storage unit 913.

### <Applicable Target of Present Technology>

The present technology can be applied to any encoding/decoding schemes.

The present technology can be applied in any desired configuration. For example, the present technology can be applied in a variety of electronic devices.

In addition, for example, the present technology can be implemented as a configuration of a part of a device such as a processor (e.g., a video processor) of a system large scale integration (LSI), a module (e.g., a video module) using a plurality of processors or the like, a unit (e.g., a video unit) using a plurality of modules or the like, or a set (e.g., a video set) with other functions added to the unit.

For example, the present technology can also be applied to a network system configured with a plurality of devices. The present technology may be implemented as, for example, cloud computing for processing shared among a plurality of devices via a network. For example, the present technology may be implemented in a cloud service that provides services regarding images (moving images) to any terminals such as a computer, an Audio Visual (AV) device, a mobile information processing terminal, and an Internet of Things (IoT) device or the like.

In the present specification, a system means a set of a plurality of constituent elements (devices, modules (parts) or the like) regardless of whether all the constituent elements are placed in the same casing. Accordingly, a plurality of devices accommodated in separate casings and connected via a network and a single device accommodating a plurality of modules in a single casing are all referred to as a system.

### <Fields and Applications to which Present Technology Is Applicable>

A system, device, a processing unit, and the like to which the present technology is applied can be used in any field such as traffic, medical treatment, security, agriculture, livestock industries, a mining industry, beauty, factories, home appliance, weather, and natural surveillance, for example. The application of the present technology can also be implemented as desired.

For example, the present technology can be applied to systems and devices for providing ornamental contents and the like. For example, the present technology can be applied to systems and devices available for traffic, such as traffic condition monitoring and autonomous driving control. For example, the present technology can be applied to systems and devices available for security. For example, the present technology can be applied to systems and devices available for automatic control of machines and the like. For example, the present technology can be applied to systems and devices available for agriculture and livestock industry. The present technology can also be applied, for example, to systems and devices for monitoring natural conditions such as volcanoes, forests, and oceans and wildlife. For example, the present technology can be applied to systems and devices available for sports.

### <Other>

As used herein, "flag" is information for identifying a plurality of states and includes not only information used to identify two states of true (1) or false (0) but also information that allows identification of three or more states.

Therefore, a value that can be indicated by "flag" may be, for example, a binary value of 1 or 0 or may be ternary or larger. In other words, the number of bits constituting "flag" may be any number, e.g., 1 bit or a plurality of bits. It is also assumed that the identification information (also including a flag) is included in a bitstream or the difference information of identification information with respect to certain reference information is included in a bitstream. Thus, "flag" and "identification information" in the present specification include not only the information but also the difference information with respect to the reference information.

Various kinds of information (such as meta data) related to captured images may be transmitted or recorded in any form as long as the information is associated with a captured image. For example, the term "associate" means that when one data is processed, the other may be used (may be associated). In other words, mutually associated items of data may be integrated into one item of data or may be individual items of data. For example, information associated with encoded data (image) may be transmitted through a transmission path that is different from that for the encoded data (image). For example, the information associated with the encoded data (image) may be recorded in a recording medium that is different from that for the encoded data (image) (or a different recording area in the same recording medium). This "association" may be for part of the data instead of the entirety of the data. For example, an image and information corresponding to the image may be associated with a plurality of frames, one frame, or any unit such as a part within the frame.

As used herein, terms such as "synthesize", "multiplex", "add", "integrate", "include", "store", "put in", "enclose", and "insert" may mean, for example, combining a plurality of objects into one, such as combining coded data and metadata into one piece of data, and means one method of "associating" described above.

Embodiments of the present technology are not limited to the above-described embodiments and can be changed variously within the scope of the present technology without departing from the spirit and scope of the present technology.

For example, a configuration described as one device (or processing unit) may be split into and configured as a plurality of devices (or processing units). Conversely, configurations described above as a plurality of devices (or processing units) may be integrated and configured as one device (or processing unit). It is a matter of course that configurations other than the aforementioned configurations may be added to the configuration of each device (or each processing unit). Moreover, some of the configurations of a certain device (or processing unit) may be included in a configuration of another device (or another processing unit) as long as the configurations and operations of the overall system are substantially identical to one another.

For example, the foregoing program may be executed by any device. In this case, the device only needs to have necessary functions (such as functional blocks) to obtain necessary information.

For example, each step of one flowchart may be executed by one device, or may be shared and executed by a plurality of devices. When a plurality of processing steps are included in one step, one device may execute the plurality of processing steps, or the plurality of devices may share and execute the plurality of processing steps. In other words, it is also possible to execute the plurality of processing steps included in one step as processing of a plurality of steps. Reversely, processing described as a plurality of steps can be collectively executed as one step.

For example, in a program that is executed by a computer, processing of steps describing the program may be executed in time series in the order described in the present specification, or may be executed in parallel or individually at a required timing, for example, when a call is made. In other words, the processing of steps may be executed in an order different from the above-described order if no contradiction arises. Furthermore, the processing of the steps describing this program may be performed in parallel with processing of another program, or may be performed in combination with the processing of the other program.

For example, a plurality of techniques regarding the present technology can be independently implemented if no contradiction arises. As a matter of course, any number of techniques regarding the present technology can also be implemented in combination. For example, the present technology described in any one of the embodiments may be implemented partially or entirely in combination with at least part of the present technology described in other embodiments. It is also possible to implement some or all of any of the above-described technologies in combination with other technologies not described above.

The present technique can also be configured as follows.
(1) An image processing device including:
   a setting unit that sets a first time;
   an acquisition unit that acquires a second time supplied from a server;
   a time management unit that manages, using a local clock generated in the device, first time information in which the set first time is set as a start time and second time information in which the acquired second time is set as a start time;
   an imaging unit that captures an image of a subject to generate a captured image; and
   a file generation unit that generates a file storing the captured image, a first image capture time indicating a timing of generation of the captured image by using the first time information, and a second image capture time indicating the timing of generation by using the second time information.
(2) The image processing device according to (1), wherein the file generation unit is configured to store, in the file, the second time indicating a timing of acquisition.
(3) The image processing device according to (2), wherein the file generation unit is configured to store, in the file, identification information for identifying the device.
(4) The image processing device according to (2) or (3), wherein the file generation unit is configured to store, in the file, deviation amount information indicating an amount of deviation of the local clock per unit time.
(5) The image processing device according to any one of (2) to (4), wherein the acquisition unit is configured to supply, when acquiring the second time, to the server, identification information for identifying the device, a current time indicated by the second time information, and the second time indicating the timing of previous acquisition.
(6) The image processing device according to any one of (1) to (5), wherein the time management unit is configured to no longer store, in the file, the second image capture time when the time management unit cannot manage the second time information.
(7) The image processing device according to any one of (1) to (6), wherein the acquisition unit is configured to acquire the second time when the device starts up, stops operation, or connects to a network.
(8) The image processing device according to any one of (1) to (7), wherein the acquisition unit acquires and decrypts the second time that has been encrypted.
(9) The image processing device according to any one of (1) to (8), wherein the setting unit is configured to use the second time information to set the first time.
(10) The image processing device according to (9), wherein the setting unit is configured to select, based on a user instruction, whether or not to use the second time information to set the first time.
(11) The image processing device according to any one of (1) to (10), further including a signature generation unit that generates an electronic signature for the captured image, the first captured image time, and the second captured image time,
   wherein the file generation unit is configured to store, in the file, the generated electronic signature.
(12) An image processing method including:
   setting a first time;
   acquiring a second time supplied from a server;
   managing, using a local clock generated in a device, first time information in which the set first time is set as a start time and second time information in which the acquired second time is set as a start time;
   capturing an image of a subject to generate a captured image; and
   generating a file storing the captured image, a first image capture time indicating a timing of generation of the captured image by using the first time information, and a second image capture time indicating the timing of generation by using the second time information.
(13) An image processing device including:
   a file acquisition unit that acquires a file in which a captured image generated by an imaging device, a first image capture time indicating a timing of generation of the captured image by using first time information, and a second image capture time indicating the timing of generation by using second time information are stored; and
   a display processing unit that displays the captured image, the first image capture time, and the second image capture time,
   wherein
   the first time information is time information, in which a first time set in the imaging device is set as a start time, and, which is managed using a local clock generated in the imaging device, and
   the second time information is time information, in which a second time supplied to the imaging device from a server is set as a start time, and, which is managed using the local clock.
(14) The image processing device according to (13), further including an authenticity determination unit that determines authenticity of the captured image, based on the first image capture time and the second image capture time, wherein the display processing unit is configured to display a result of determining the authenticity.
(15) The image processing device according to (13) or (14), further including a reliability determination unit that determines reliability of the second image capture time,
   wherein the display processing unit is configured to display the reliability as determined.
(16) The image processing device according to any one of (13) to (15), wherein
   the file stores the second time, and
   the display processing unit is configured to display the second image capture time that has been corrected, based on an amount of deviation of the local clock per unit time and the second time.
(17) The image processing device according to (16), further including:
   a deviation amount information acquisition unit that acquires deviation amount information indicating the amount of deviation of the local clock per unit time from the server; and
   an image capture time correction unit that corrects the second image capture time, based on the acquired deviation amount information and the second time.
(18) The image processing device according to (16), further including an image capture time acquisition unit that acquires the corrected second image capture time from the server.
(19) The image processing device according to (16), wherein
   the file stores deviation amount information indicating the amount of deviation of the local clock per unit time and the second time,
   the image processing device further including an image capture time correction unit that corrects the second image capture time, based on the deviation amount information and the second time.
(20) An image processing method including:
   acquiring a file in which a captured image generated by an imaging device, a first image capture time indicating a timing of generation of the captured image by using first time information, and a second image capture time indicating the timing of generation by using second time information are stored; and
   displaying the captured image, the first image capture time, and the second image capture time,
   wherein the first time information is time information, in which a first time set in the imaging device is set as a start time, and, which is managed using a local clock generated in the imaging device, and
   the second time information is time information, in which a second time supplied to the imaging device from a server is set as a start time, and, which is managed using the local clock.
(21) An information processing device including a deviation amount management unit that manages, for each of other devices, an amount of deviation of a local clock generated in the other device per unit time.
(22) The information processing device according to (21), further including a deviation amount information supply unit that supplies deviation amount information indicating the amount of deviation of a local clock per unit time in a specified other device to a display device that displays a captured image generated in the other device.
(23) The information processing device according to (21), further including:
   an image capture time correction unit that corrects, by using the amount of deviation of the local clock per unit time in the specified other device, an image capture time of a captured image generated in the other device; and
   an image capture time supply unit that supplies the corrected image capture time to a display device that displays the captured image.
(24) The information processing device according to any one of (21) to (23), further including:
   an acquisition unit that acquires, when supplying a first current time to the other device, identification information for identifying the other device, a second current time previously supplied to the other device, and a third current time indicated by time information managed by the other device by using the local clock with the second current time being set as a start time; and
   a deviation amount derivation unit that derives the amount of deviation per unit time by using the first current time and the acquired second current time and third current time,
   wherein
   the deviation amount management unit is configured to use the acquired identification information to manage the derived amount of deviation per unit time for each of the other devices.
(25) The information processing device according to any one of (21) o (24), further including a current time supply unit that supplies a current time to the other device through encrypted communication.
(26) An information processing method including managing, for each of other devices, an amount of deviation of a local clock generated in the other device per unit time.

### [Reference Signs List]

- 100: Image processing system
- 110: Network
- 111: Imaging device
- 112: Display device
- 113: Clock server
- 201: Control unit
- 211: Time setting unit
- 212: Time acquisition unit
- 213: Time management unit
- 221: Optical system
- 222: Sensor unit
- 228: Hash processing unit
- 230: Signature generation unit
- 231: Image file generation unit
- 232: Image file recording unit
- 233: Image file supply unit
- 311: Image file acquisition unit
- 312: Display processing unit
- 321: Authenticity determination unit
- 322: Reliability determination unit
- 323: Deviation amount information acquisition unit
- 324: Image capture time correction unit
- 325: Image capture time acquisition unit
- 411: Time management unit
- 412: Current time supply unit
- 413: Time acquisition unit
- 414: Deviation amount derivation unit
- 421: Deviation amount management unit
- 422: Request acquisition unit
- 423: Deviation amount information supply unit
- 424: Image capture time correction unit
- 425: Image capture time supply unit
- 900: Computer

## Claims

1. An image processing device comprising:
a setting unit that sets a first time;
an acquisition unit that acquires a second time supplied from a server;
a time management unit that manages, using a local clock generated in the device, first time information in which the set first time is set as a start time and second time information in which the acquired second time is set as a start time;
an imaging unit that captures an image of a subject to generate a captured image; and
a file generation unit that generates a file storing the captured image, a first image capture time indicating a timing of generation of the captured image by using the first time information, and a second image capture time indicating the timing of generation by using the second time information.

2. The image processing device according to claim 1, wherein the file generation unit is configured to store, in the file, the second time indicating a timing of acquisition.

3. The image processing device according to claim 2, wherein the file generation unit is configured to store, in the file, identification information for identifying the device.

4. The image processing device according to claim 2, wherein the file generation unit is configured to store, in the file, deviation amount information indicating an amount of deviation of the local clock per unit time.

5. The image processing device according to claim 2, wherein the acquisition unit is configured to provide, when acquiring the second time, to the server,
identification information for identifying the device, a current time indicated by the second time information, and the second time indicating the timing of previous acquisition.

6. The image processing device according to claim 1, wherein the time management unit is configured to no longer store in the file the second image capture time when the time management unit cannot manage the second time information.

7. The image processing device according to claim 1, wherein the acquisition unit is configured to acquire the second time when the device starts up, stops operation, or connects to a network.

8. The image processing device according to claim 1, wherein the acquisition unit acquires and decrypts the second time that has been encrypted.

9. The image processing device according to claim 1, wherein the setting unit is configured to use the second time information to set the first time.

10. The image processing device according to claim 9, wherein the setting unit is configured to select, based on a user instruction, whether or not to use the second time information to set the first time.

11. The image processing device according to claim 1, further comprising a signature generation unit that generates an electronic signature for the captured image, the first captured image time, and the second captured image time,
wherein the file generation unit is configured to store, in the file, the generated electronic signature.

12. An image processing method comprising:
setting a first time;
acquiring a second time supplied from a server;
managing, using a local clock generated in a device, first time information in which the set first time is set as a start time and second time information in which the acquired second time is set as a start time;
capturing an image of a subject to generate a captured image; and
generating a file storing the captured image, a first image capture time indicating a timing of generation of the captured image by using the first time information, and a second image capture time indicating the timing of generation by using the second time information.

13. An image processing device comprising:
a file acquisition unit that acquires a file in which a captured image generated by an imaging device, a first image capture time indicating a timing of generation of the captured image by using first time information, and a second image capture time indicating the timing of generation by using second time information are stored; and
a display processing unit that displays the captured image, the first image capture time, and the second image capture time,
wherein
the first time information is time information, in which a first time set in the imaging device is set as a start time, and, which is managed using a local clock generated in the imaging device, and
the second time information is time information, in which a second time supplied to the imaging device from a server is set as a start time, and, which is managed using the local clock.

14. The image processing device according to claim 13, further comprising an authenticity determination unit that determines authenticity of the captured image, based on the first image capture time and the second image capture time, wherein the display processing unit is configured to display a result of determining the authenticity.

15. The image processing device according to claim 13, further comprising a reliability determination unit that determines reliability of the second image capture time,
wherein the display processing unit is configured to display the reliability as determined.

16. The image processing device according to claim 13, wherein
the file stores the second time, and
the display processing unit is configured to display the second image capture time that has been corrected, based on an amount of deviation of the local clock per unit time and the second time.

17. The image processing device according to claim 16, further comprising:
a deviation amount information acquisition unit that acquires deviation amount information indicating the amount of deviation of the local clock per unit time from the server; and
an image capture time correction unit that corrects the second image capture time, based on the acquired deviation amount information and the second time.

18. The image processing device according to claim 16, further comprising an image capture time acquisition unit that acquires the corrected second image capture time from the server.

19. The image processing device according to claim 16, wherein
the file stores deviation amount information indicating the amount of deviation of the local clock per unit time and the second time,
the image processing device further comprising an image capture time correction unit that corrects the second image capture time, based on the deviation amount information and the second time.

20. An image processing method comprising:
acquiring a file in which a captured image generated by an imaging device, a first image capture time indicating a timing of generation of the captured image by using first time information, and a second image capture time indicating the timing of generation by using second time information are stored; and
displaying the captured image, the first image capture time, and the second image capture time,
wherein the first time information is time information, in which a first time set in the imaging device is set as a start time, and, which is managed using a local clock generated in the imaging device, and
the second time information is time information, in which a second time supplied to the imaging device from a server is set as a start time, and, which is managed using the local clock.
